# EUROPEAN PATENT APPLICATION

(11) **EP 1 645 573 A1**
(43) Date of publication of application: **12.04.2006**
(21) Application number: 04746805.3
(22) Date of filing: 01.07.2004
(51) Int. Cl.: C08F 8/00, C08F 6/08, C08F 6/10, C08F 10/00

(54) **PROCESS FOR PRODUCING MODIFIED POLYOLEFIN**

(30) Priority: 14.07.2003 JP 2003196497
(71) Applicant: Tonen Chemical Corporation, Minato-Ku, Tokyo 105-8572 (JP)
(72) Inventor: SUZUKI, Sadakatsu, Kawaguchi-shi, Saitama 3320015 (JP); NISHIDA, Mitsuhiro, Yokohama-shi, Kanagawa 2240023 (JP); HORII, Masatoshi, 1430016 (JP); UEKI, Satoshi, 1430023 (JP)
(74) Representative: Moinas, Michel
(86) International application number: PCT/JP2004/009336
(87) International publication number: WO 2005/005491

(57) **Abstract**

A process for producing a modified polyolefin, in which reduction in polymer loss and solvent loss can be attained in modified-polyolefin production steps and the number of the steps can be reduced. It is excellent in productivity and profitability. The process for modified-polyolefin production is **characterized by** comprising: a step in which an alpha-olefin is polymerized in a liquid phase in the presence of a homogeneous metal complex catalyst to obtain a solution of a lowly crystalline or noncrystalline polyolefin; a step in which the polyolefin solution obtained is continuously dried; and a step in which the dried polyolefin is supplied to an extrusion kneader and modified.

## Description

### BACKGROUND OF THE INVENTION

### FIELD OF THE INVENTION

The present invention relates to a method for producing a modified polyolefin, more specifically a method for producing a modified polyolefin which polymerizes an α-olefin and modifies the resulting polyolefin with a modifier, characterized in that it can reduce polymer and solvent losses, reduce number of steps, and hence improve productivity and economic efficiency of the production process.

### DESCRIPTION OF THE PRIOR ART

Polyolefins, e.g., polypropylene and polyethylene, are little compatible with other base materials, such as polar resins (e.g., acryl resin and vinyl acetate resin), because they are highly crystalline and nonpolar. Therefore, they involve problems of difficulty in finding demands in some areas, e.g., painting, adhesive joining and printing.

One of the attempts to solve these problems is graft modification which modifies a polyolefin resin, e.g., polypropylene, with a monomer containing a functional group into the modified polyolefin.

Moreover, one of the methods proposed for producing the modified polyolefin reacts an amorphous polyolefin with a modifier monomer (e.g., unsaturated carboxylic anhydride) and radical reaction initiator (e.g., organic peroxide) in an extrusion kneader, and neutralizes the resulting acid-modified amorphous polyolefin (as disclosed, e.g., by JP-A-9-3124). However, the polymer involves problems resulting from poor operability for recovery and drying, because it is highly adhesive and self-fusible and tends to take the form of unstable jelly.

On the other hand, a low-crystallinity or amorphous polyolefin produced in the presence of a homogeneous metallic complex catalyst is recovered in a condition of being dissolved or dispersed in a solvent. One of the methods which have been often adopted to isolate the polymer from the polyolefin solution adds the reaction effluent to a large quantity of poor solvent for the polyolefin, separates the polyolefin and then recovers it by filtration or centrifugal separation. This method, however, involves problems, e.g., need for a large quantity of poor solvent, difficulty in separating the reaction solvent and poor solvent from each other and recovering them, and need for a large quantity of labor for drying the separated polymer.

This polymer is also highly adhesive and self-fusible to deteriorate recovery and drying operability, and, at the same time, is not easily formed into powder or pellets, which are convenient for transportation.

The process for modifying a low-crystallinity or amorphous polyolefin needs a number of steps, as described above, to cause large quantities of polymer and solvent losses. Therefore, there are demands for methods of high productivity and economic efficiency for producing modified polyolefins.

### SUMMARY OF THE INVENTION

It is an object of the present invention to provide a method for producing a modified polyolefin which can improve productivity and economic efficiency by reducing polymer and solvent losses in the modified polyolefin production process in which a low-crystallinity or amorphous polyolefin solution (including slurry, which is valid throughout this specification) is dried and subsequently modified with a modifier, and also by reducing number of the production steps, in consideration of the above situations.

The inventors of the present invention have found, after having extensively studied to achieve the above object, that a desired modified polyolefin can be produced by the method comprising steps for polymerizing an α-olefin in the liquid phase in the presence of a homogeneous metallic complex catalyst; for transferring the resulting low-crystallinity or amorphous polyolefin solution to a drier; for continuously drying the solution to remove the solvent and lighter components in the drier; for supplying the resulting molten polyolefin substantially free of solvent to a extrusion kneader; and for modifying the polyolefin with a modifier in the presence of a radical reaction initiator in the extrusion kneader, achieving the present invention.

The first aspect of the present invention is a method for producing a modified polyolefin, comprising steps for polymerizing an α-olefin in the liquid phase in the presence of a homogeneous metallic complex catalyst to produce a low crystallinity or amorphous polyolefin solution; for continuously drying the resulting polyolefin solution; and for modifying the dried polyolefin in an extrusion kneader.

The second aspect of the present invention is the method of the first aspect for producing a modified polyolefin, wherein a step is included for removing the catalyst component before drying the polyolefin solution.

The third aspect of the present invention is the method of the first or second aspect for producing a modified polyolefin, wherein the polyolefin solution is dried in an extrusion drier equipped with a vent.

The present invention provides a method for producing a modified polyolefin, as described above, and the preferred embodiments include:
(1) The method of the first aspect for producing a modified polyolefin, wherein the homogeneous metallic complex catalyst is composed of a vanadium complex and organoaluminum compound.
(2) The method of the first aspect for producing a modified polyolefin, wherein the homogeneous metallic complex catalyst is composed of an alkoxy complex of titanium, zirconium or hafnium and an aluminoxane, boron compound or organoaluminum compound.
(3) The method of the first aspect for producing a modified polyolefin, wherein the homogeneous metallic complex catalyst is composed of a metallocene compound and organoaluminum compound.
(4) The method of the first aspect for producing a modified polyolefin, wherein the drying is carried out under a vacuum of 1 to 700 mmHg.
(5) The method of the first aspect for producing a modified polyolefin, wherein the drying is carried out at 30 to 240°C.
(6) The method of the first aspect for producing a modified polyolefin, wherein the drying is carried out at a residence time of 1 to 180 minutes.
(7) The method of the first aspect for producing a modified polyolefin, wherein a modifier and/or radical reaction initiator are (is) incorporated in 2 or more installments for modification of polyolefin.
(8) The method of the first aspect for producing a modified polyolefin, wherein a modifier is incorporated for modification of polyolefin after being dissolved in a solvent or molten under heating.
(9) The method of the first aspect for producing a modified polyolefin, wherein the polyolefin is modified in an extrusion kneader operating at 60 to 220°C.
(10) The method of the first aspect for producing a modified polyolefin, wherein the polyolefin is modified in an extrusion kneader at a residence time of 0.1 to 20 minutes.
(11) The method of the first aspect for producing a modified polyolefin, wherein the modified polyolefin is treated to remove the unreacted modifier and/or modifier derivative in an extrusion drier equipped with a vent.
(12) The method of the first aspect for producing a modified polyolefin, wherein the polyolefin has a weight-average molecular weight of 2,000 to 600,000.
(13) The method of the first aspect for producing a modified polyolefin, wherein the polyolefin has a racemic diad fraction [r] of 0.12 to 0.88.
(14) The method (13) for producing a modified polyolefin, wherein the polyolefin has a racemic diad fraction [r] of 0.51 to 0.88.
(15) The method (13) or (14) for producing a modified polyolefin, wherein the polyolefin has a racemic diad fraction [r] of 0.54 to 0.84.
(16) The method of the second aspect for producing a modified polyolefin, wherein the step for removing the catalyst component is carried out by filtration in the presence of a filtration aid.
(17) The method (16) for producing a modified polyolefin, wherein the filtration aid is at least one species selected from the group consisting of fine fibrous cellulose, asbestos, cerite, pearlite, diatomaceous earth, white clay, silica and alumina.
(18) The method of the second aspect for producing a modified polyolefin, wherein the polyolefin solution is incorporated with a compound having hydroxyl group or brought into contact with an adsorbent to insolubilize the catalyst component in the step for removing the catalyst component.
(19) The method (18) for producing a modified polyolefin, wherein the compound having hydroxyl group is at least one species selected from the group consisting of water, polyhydric alcohol and carboxylic acid.
(20) The method (18) for producing a modified polyolefin, wherein the adsorbent is at least one species selected from the group consisting of ion-exchanging resin, chelate resin and high-molecular-weight coagulant.

The present invention provides a method for producing a modified polyolefin which treats a polyolefin solution to remove the solvent and lighter components, dries the polyolefin to a state substantially free of solvent, and modifies the polyolefin by melting/kneading with a modifier monomer. The process is characterized by reduced polymer and solvent losses in each step, and by improved operability and economic efficiency. Moreover, it brings advantages, e.g., reduced investment, and reduces liquid wastes or the like to contribute to abatement of environment loads.

### BRIEF DESCRIPTION OF THE DRAWINGS

Figure 1 outlines the representative process for producing a modified polyolefin by the present invention.
Figure 2 describes a specific process for producing a modified polyolefin by the present invention.

### NOTATION

- (i): Polymerization step
- (ii): Drying step
- (iii): Modification step
- (iv): Catalyst removal step
- (a): Insolubilization of catalyst
- (b): Removing catalyst
- (v): Refining step
- A: Reaction tank
- B: Catalyst component deposition tank
- C: Catalyst component separation unit
- D: Drier
- E: Kneader

### DETAILED DESCRIPTION OF THE INVENTION

The method of the present invention for producing a modified polyolefin is described in detail for each item.

### 1. Outline of process step flow

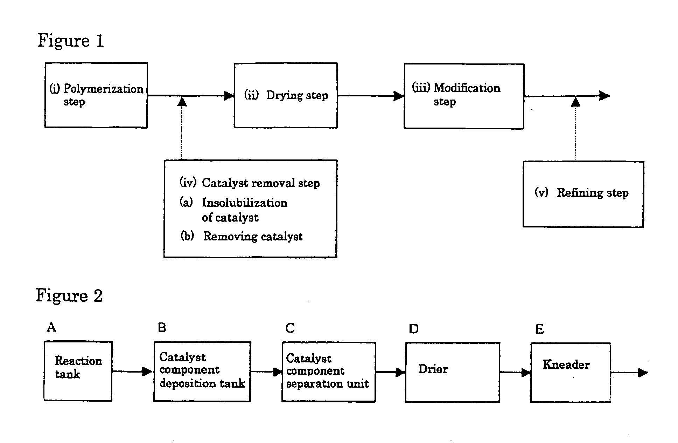

The process flow of a series of steps including polymerization of α-olefin, drying of polyolefin solution and modification of polyolefin for the present invention is described by referring to Fig. 1.

The method of the present invention for producing a modified polyolefin comprises the following steps; (i) polymerizing an α-olefin in the liquid phase in the presence of a homogeneous metallic complex catalyst to produce the polyolefin solution, (ii) continuously drying the polyolefin solution, and (iii) modifying the resulting dried/molten polyolefin in an extrusion kneader.

The method can include a step (iv) for removing the catalyst component before drying the polyolefin solution, or step (v) for treating the modified polyolefin to remove the unreacted modifier and/or modifier derivative.

### 2. Detailed description of the process

The method of the present invention first polymerizes an α-olefin (a) in the presence of a reaction solvent (b) and homogeneous metallic complex catalyst (c) to produce the polyolefin (PO1); transfers the resulting polyolefin solution to a drier (g) to continuously dry the solution in the drier; then supplies the resulting polyolefin to an extrusion kneader (h) to modify the polyolefin in the presence of a radical reaction initiator (j) and modifier (k) in the kneader to produce the modified polyolefin (PO2). A step for removing the catalyst component may be included before drying the polyolefin solution.

The modified polyolefin (PO2) may be refined by removing the unreacted modifier and by-product(s). The polyolefin (PO1) and modified polyolefin (PO2) may be hereinafter referred to simply as the polymer.

### (i) Polymerization step

### (a) α-olefin

The α-olefin as a starting material for the present invention is an olefin of 2 to 8 carbon atoms, e.g., ethylene, propylene, 1-butene, 1-hexene or 4-methyl-1-pentene, of which propylene is particularly preferable as a starting material for a homopolymer.

Preferable starting materials for a copolymer are at least 2 species selected from the group consisting of ethylene, propylene, 1-butene, 1-hexene or 4-methyl-1-pentene.

### (b) Reaction solvent

A reaction solvent is preferably inactive against the polymerization reaction and liquid in the polymerization process. It is more preferably liquid under the atmospheric pressure at room temperature. In the following description, a solvent means a reaction solvent, unless otherwise described.

More specifically, reaction solvents include saturated aliphatic hydrocarbons, e.g., hexane, heptane, octane and decane; saturated alicyclic hydrocarbons, e.g., alkylated cyclopentane, cyclohexane and alkylated cyclohexane; aromatic hydrocarbons, e.g., benzene, toluene, xylene, ethylbenzene, methylethylbenzene and propylbenzene; and THF. They may be used either individually or in combination.

### (c) Homogeneous metallic complex catalyst

A homogeneous metallic complex catalyst is a catalyst composed of an organometallic compound and organoaluminum compound, or a metal complex comprising an organic compound containing a hetero atom (e.g., oxygen or nitrogen) and transition metal. These catalysts include:
(I) catalyst composed of a vanadium complex and organoaluminum compound,
(II) catalyst composed of a compound having one cycloalkadienyl group (including a derivative thereof of a metal selected from the group consisting of titanium, zirconium and hafnium, and at least one alkoxy or alkylamino group; and an aluminoxane, boron compound or organoaluminum compound,
(III) catalyst composed of a complex having two cycloalkadienyl groups (including derivatives thereof) of a metal selected from the group consisting of titanium, zirconium and hafnium, and a halogen or alkyl group; and an aluminoxane, boron compound or organoaluminum compound,
(IV) catalyst composed of a diimine complex of nickel, palladium or the like; and an aluminoxane,
(V) catalyst composed of a phenoxyimine complex of titanium, zirconium, hafnium or the like; and an aluminoxane,
(VI) catalyst composed of a pyrroleimine complex of titanium or the like and an aluminoxane, and
(VII) catalyst composed of at least one complex selected from the group consisting of an alkoxy complex, alkyl amide complex and acetylacetone complex of Ti, Zr or Hf; and an aluminoxane, boron compound or organoaluminum compound.

Some of the vanadium complexes useful for the catalysts (I) composed of a vanadium complex and organoaluminum compound are described in Makromol. Chem., 180, 57-64 (1979).

More specifically, they include VOCl₃, VCl₄, V(acetylacetonate)₃, V(2-methyl-1,3-butanedionate)₃, V(1,3-butanedionate)₃, VO(acetylacetonate)₂, VOCl₂(acetylacetonate), VOCl(acetylacetonate)₂ and VO(OR)₃. The other complexes include the vanadium compounds with a ligand, e.g., alkyl imide or arylimide, represented by the general formula (1) or (2).

The organoaluminum compounds include alkyl aluminum halides, e.g., dimethyl aluminum chloride, diethyl aluminum chloride, diethyl aluminum bromide, diethyl aluminum iodide, diisobutyl aluminum chloride, ethyl aluminum sesquichloride, ethyl aluminum dichloride and isobutyl aluminum dichloride; and aluminoxanes, e.g., methyl aluminoxane.

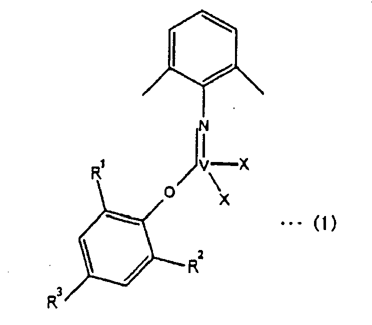

In the general formula (1), X is F, Cl, Br, I or an alkyl group of 1 to 3 carbon atoms; and R¹ to R³ are each an alkyl group of 1 to 4 carbon atoms.

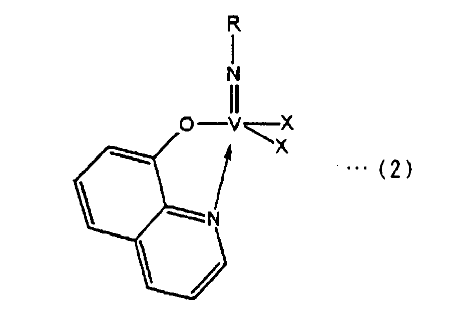

In the general formula (2), X is F, Cl, Br, I or an alkyl group of 1 to 3 carbon atoms; and R is an alkyl group of 1 to 4 carbon atoms.

In the catalyst, the vanadium complex is incorporated at 1 x 10⁻⁵ to 0.1 mols, preferably 1 x 10⁻⁴ to 5 x 10⁻² mols, and organoaluminum compound at 1 x 10⁻⁴ to 0.1 mols, preferably 5 x 10⁻³ to 0.05 mols, each per mol of olefin.

The catalyst (I) may be incorporated, as required, with an electron donor. The electron donors include oxygen-containing ones, e.g., alcohols, phenols, ketones, aldehydes, carboxylic acid, malonic acid, esters of an organic or inorganic acid, monoethers, diethers and polyethers; and nitrogen-containing ones, e.g., ammonia, amines, nitriles and isocyanates. The electron donor is incorporated at 0.01 to 20 mols per mol of the vanadium complex.

The polymerization is carried out at -100 to 90°C for 0.5 to 100 hours, preferably at -50 to 50°C for 1 to 50 hours.

Molecular weight, molecular weight distribution and production yield can be controlled by controlling reaction temperature and time. Polypropylene having a molecular weight distribution close to that of a monodisperse system can be produced, when reaction temperature is controlled at -30°C or lower.

The compounds having one cycloalkadienyl group (including a derivative thereof) of a metal selected from the group consisting of titanium, zirconium and hafnium, and at least one alkoxy or alkylamino group for the catalyst (II) include those represented by one of the general formulae (3) to (5).

For example, the compounds represented by the general formula (3) include CpTi(OMe)₃, CpTi(OEt)₃, CpTi(O-iPr)₃, CpTi(O-tBu)₃, CpTi(OC₆H₅)₃, CpTi(2-Me-OC₆H₄)₃, CpTi(2-Et-OC₆H₄)₃, CpTi(2-Pr-OC₆H₄)₃, CpTi(2-tBu-OCeH₄)₃, CpTi(2,6-(MeO)₂C₆H₃)₃, CpTi(2,6-(EtO)₂C₆H₃)₃, CpTi(2,6-(iPr-O)₂C₆H₃)₃, CpTi(2,6-(t-Bu-O)₂C₆H₃)₃, CpTi(2-Me-6-tBu-OC₆H₃)₃, CpTi(3-Me-6-tBu-OC₆H₃)₃, CpTi(OMe)Cl₂, CpTi(OMe)₂Cl, CpTi(OC₆H₅)Cl₂, CpTi(OC₆H₅)₂Cl and CpTi(OMe)(OC₆H₅)Cl.

The compounds represented by the general formula (4) include (Me₂C)Cp(C₆H₄)OTiCl₂, ((C₆H₅)₂C)Cp(C₆H₄)OTiCl₂, (Me₂C)Cp(3-Me·C₆H₃)OTiCl₂, (Me₂C)Cp(5-Me-C₆H₃)OTiCl₂, (Me₂C)Cp(3-tBu-C₆H₃)OTiCl₂, (Me₂C)Cp(3,5-Me₂-C₆H₂)OTiCl₂, (Me₂C)Cp(3,5-tBu₂-C₆H₂)OTiCl₂, (Me₂C)Cp(3-Me-5-tBu-C₆H₂)OTiCl₂ and (Me₂C)Cp(3-tBu-5-Me-C₆H₂)OTiCl₂.

The compounds represented by the general formula (5) include MeNSiMe₂(Flu)TiCl₂, tBuNSiMe₂(Flu)TiCl₂, C₆H₅NSiMe₂(Flu)TiCl₂, tBuNSi(C₆H₅)₂(Flu)TiCl₂ and tBuNSiMe₂(Flu)TilMe₂.

The above examples of the general formulae (3) to (5) whose Ti is substituted by Zr or Hf are also the examples useful for the present invention.

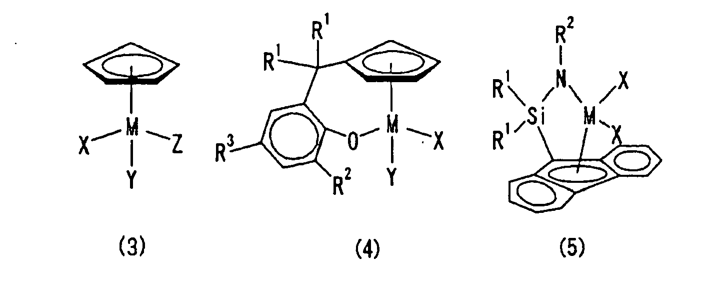

In the formulae (3) to (5), M is Ti, Zr or Hf; X, Y and Z are each a halogen selected from the group consisting of F, Cl, Br and I, aliphatic hydrocarbon group of 1 to 8 carbon atoms, alkoxy group thereof, aromatic hydrocarbon group of 6 to 14 carbon atoms or alkoxy group thereof and R¹ to R³ are each an aliphatic hydrocarbon group of 1 to 8 carbon atoms or aromatic hydrocarbon group of 6 to 14 carbon atoms, which may be substituted, where R¹ to R³ may be the same or different and so may be X, Y and Z.

The aluminoxanes include methyl aluminoxane, ethyl aluminoxane, isobutyl aluminoxane, and these aluminoxanes treated to remove the unreacted aluminum compound remaining therein and refined. A boron compound, e.g., triphenyl borane, trispentafluorophenyl borane or triphenylmethyltrispentafluoroborate, or an organoaluminum compound, e.g., dimethyl aluminum chloride, diethyl aluminum chloride, diethyl aluminum bromide, diisobutyl aluminum chloride or dioctyl aluminum chloride may be used in place of an aluminoxane.

The compound having one cycloalkadienyl group (including a derivative thereof) of a metal selected from the group consisting of titanium, zirconium and hafnium, and at least one alkoxy or alkylamino group for the catalyst is incorporated at 1 x 10⁻⁸ to 0.1 mols, preferably 1 x 10⁻⁷ to 5 x 10⁻² mols, and aluminoxane, boron compound or organoaluminum compound at 1 × 10⁻⁸ to 0.1 mols, preferably 1 x 10⁻⁷ to 0.05 mols, each per mol of the monomer.

The polymerization is carried out at -50 to 200°C for 0.5 to 100 hours, preferably at 0 to 150°C for 1 to 50 hours.

The complex for the catalyst (III), composed of a complex having two cycloalkadienyl groups (including derivatives thereof of a metal selected from the group consisting of titanium, zirconium and hafnium, and a halogen or alkyl group, and an aluminoxane, boron compound or organoaluminum compound, has two cycloalkadienyl groups (including derivatives thereof), which may be crosslinked or not.

The non-crosslinkable metallocene compounds include those represented by one of the general formulae (6) to (8).

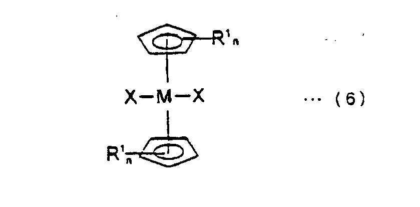

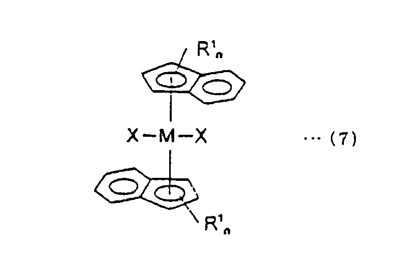

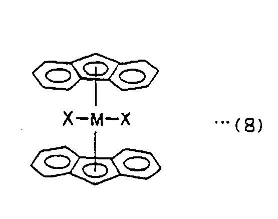

In the general formulae (6) to (8), R¹ is hydrogen atom, a substituent of an aliphatic, aromatic or alicyclic hydrocarbon group of 1 to 8 carbon atoms, or SiR₃ (R is a substituent of an alkyl, aromatic or alicyclic group of 1 to 5 carbon atoms, where Rs may be the same or different); X is a halogen atom, aliphatic hydrocarbon group of 1 to 8 carbon atoms or aromatic hydrocarbon group of 6 to 10 carbon atoms; M is a metal of Ti, Zr or Hf; and "n" is an integer of 1 to 3.

The phenyl group in the indenyl or fluorenyl group in the general formula (7) or (8) may be substituted. However, monocrosslinked compounds having a ligand, e.g., cyclopentadienyl, fluorenyl or a derivative thereof, or bisindenyl or derivative thereof, are developed for producing highly crystalline polypropylene, and are not expected to fully exhibit their effects for the present invention and are not suitable.

The noncrosslinkable metallocene compounds represented by each of the general formulae (6) to (8) are those compounds whose cyclopentadienyl group is substituted by 1 to 4 substituents, preferably by 1 to 3 substituents. Those having no substituent or 5 substituents are not desirable, because they give atactic polypropylene only.

The specific examples of the compounds whose pentadienyl group is substituted by one substituent include (methylcyclopentadienyl)₂ZrCl₂, (methylcyclopentadienyl)₂ZrBr₂, (ethylcyclopentadienyl)₂ZrCl₂, (ethylcyclopentadienyl)₂Zr(methyl)₂, (isopropylcyclopentadienyl)₂ZrCl₂, (isopropylcyclopentadienyl)₂ZrI₂, (n-propylcyclopentadienyl)₂ZrCl₂, (n-propylcyclopentadienyl)₂Zr(phenyl)₂, (n-butylcyclopentadienyl)₂ZrCl₂, (i-butylcyclopentadienyl)₂Zr(benzyl)₂, (i-butylcyclopentadienyl)₂Zr(methyl)₂, (s-butylcyclopentadienyl)₂Zr(benzyl)₂, (t-butylcyclopentadienyl)₂ZrCl₂, (t-butylcyclopentadienyl)₂ZrBr₂, (neopentylcyclopentadienyl)₂ZrCl₂, (neopentylcyclopentadienyl)₂Zr(methyl)₂, (cyclopentylcyclopentadienyl)₂ZrCl₂, (n-hexylcyclopentadienyl)₂ZrCl₂, (n-hexylcyclopentadienyl)₂Zr(phenyl)₂, (cyclohexylcyclopentadienyl)₂ZrCl₂, (cyclohexylcyclopentadienyl)₂Zr(methyl)₂, (phenylcyclopentadienyl)₂ZrCl₂, (trimethylsilylcyclopentadienyl)₂ZrCl₂, (triphenylsilylcyclopentadienyl)₂ZrCl₂, (diphenylmethylsilylcyclopentadienyl)₂ZrCl₂, (methylcyclopentadienyl)₂HfCl₂, (methylcyclopentadienyl)₂HfBr₂, (ethylcyclopentadienyl)₂HfCl₂, (ethylcyclopentadienyl)₂Hf(methyl)₂, (isopropylcyclopentadienyl)₂HfCl₂, (isopropylcyclopentadienyl)₂HfI₂, (n-propylcyclopentadienyl)₂HfCl₂, (n-propylcyclopentadienyl)₂Hf(phenyl)₂, (n-butylcyclopentadienyl)₂HfCl₂, (i-butylcyclopentadienyl)₂Hf(benzyl)₂, (i-butylcyclopentadienyl)₂Hf(methyl)₂, (s-butylcyclopentadienyl)₂Hf(benzyl)₂, (t-butylcyclopentadienyl)₂HfCl₂, (t-butylcyclopentadienyl)₂HfBr₂, (neopentylcyclopentadienyl)₂HfCl₂, (neopentylcyclopentadienyl)₂Hf(methyl)₂, (cyclopentylcyclopentadienyl)₂HfCl₂, (cyclopentylcyclopentadienyl)₂HfCl₂, (n-hexylcyclopentadienyl)₂HfCl₂, (n-hexylcyclopentadienyl)₂Hf(phenyl)₂, (cyclohexylcyclopentadienyl)₂HfCl₂, (cyclohexylcyclopentadienyl)₂Hf(methyl)₂, (phenylcyclopentadienyl)₂HfCl₂, (trimethylsilylcyclopentadienyl)₂HfCl₂, (triphenylsilylcyclopentadienyl)₂HfCl₂, (diphenylmethylsilylcyclopentadienyl)₂HfCl₂, (methylcyclopentadienyl)₂TiCl₂, (methylcyclopentadienyl)₂TiBr₂, (ethylcyclopentadienyl)₂TiCl₂, (ethylcyclopentadienyl)₂Ti(methyl)₂, (isopropylcyclopentadienyl)₂TiCl₂, (isopropylcyclopentadienyl)₂TiI₂, (n-propylcyclopentadienyl)₂TiCl₂, (n-propylcyclopentadienyl)₂Ti(phenyl)₂, (n-butylcyclopentadienyl)₂TiCl₂, (i-butylcyclopentadienyl)₂Ti(benzyl)₂, (i-butylcyclopentadienyl)₂Ti(methyl)₂, (s-butylcyclopentadienyl)₂Ti(benzyl)₂ (t-butylcyclopentadienyl)₂TiCl₂, (t-butylcyclopentadienyl)₂TiBr₂, (neopentylcyclopentadienyl)₂TiCl₂, (neopentylcyclopentadienyl)₂Ti(methyl)₂, (cyclopentylcyclopentadienyl)₂TiCl₂, (cyclopentylcyclopentadienyl)₂TiCl₂, (n-hexylcyclopentadienyl)₂TiCl₂, (n-hexylcyclopentadienyl)₂Ti(phenyl)₂, (cyclohexylcyclopentadienyl)₂TiCl₂, (cyclohexylcyclopentadienyl)₂Ti(methyl)₂, (phenylcyclopentadienyl)₂TiCl₂, (trimethylsilylcyclopentadienyl)₂TiCl₂, (triphenylsilylcyclopentadienyl)₂TiCl₂ and (diphenylmethylsilylcyclopentadienyl)₂TiCl₂.

The specific examples of the compounds whose cyclopentadienyl group is substituted by 2 substituents include (dimethylcyclopentadienyl)₂ZrCl₂, (dimethylcyclopentadienyl)₂ZrBr₂, (methylethylcyclopentadienyl)₂ZrI₂, (methylpropylcyclopentadienyl)₂Zr(methyl)₂, (dipropylcyclopentadienyl)₂Zr(phenyl)₂, (diphenylcyclopentadienyl)₂Zr(benzyl)₂, (indenyl)₂ZrCl₂, (dimethylcyclopentadienyl)₂HfCl₂, (dimethylcyclopentadienyl)₂HfBr₂, (methylethylcyclopentadienyl)₂Hfl₂, (methylpropylcyclopentadienyl)₂Hf(methyl)₂, (dipropylcyclopentadienyl)₂Hf(phenyl)₂, (diphenylcyclopentadienyl)₂Hf(benzyl)2, (indenyl)₂HfCl₂, (dimethylcyclopentadienyl)₂TiCl₂, (dimethylcyclopentadienyl)₂TiBr₂, (methylethylcyclopentadienyl)₂TiI₂, (methylpropylcyclopentadienyl)₂Ti(methyl)₂, (dipropylcyclopentadienyl)₂Ti(phenyl)₂, (diphenylcyclopentadienyl)₂Ti(benzyl)₂ and (indenyl)₂TiCl₂.

The specific examples of the compounds whose cyclopentadienyl group is substituted by 3 or 4 substituents include (trimethylcyclopentadienyl)₂ZrCl₂, (indenylmethyl)₂ZrCl₂, (tetramethylcyclopentadienyl)₂ZrCl₂, (fluorenyl)₂ZrCl₂, (trimethylcyclopentadienyl)₂HfCl₂, (indenylmethyl)₂HfCl₂, (tetramethylcyclopentadienyl)₂HfCl₂, (fluorenyl)₂HfCl₂, (trimethylcyclopentadienyl)₂TiCl₂, (indenylmethyl)₂TiCl₂, (tetramethylcyclopentadienyl)₂TiCl₂ and (fluorenyl)₂TiCl₂.

The monocrosslinked metallocene compounds include those represented by the general formula (9):

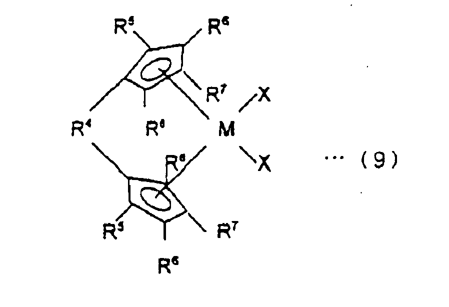

In the general formula (9), R⁴ is a divalent aromatic, alicyclic or aliphatic hydrocarbon group, or divalent group containing an element other than C or H, e.g., oxygen, nitrogen or silicon; R⁵ to R⁸ are each hydrogen atom or an aliphatic hydrocarbon group of 1 to 8 carbon atoms, where they may be the same or different, and at least one of R⁵ to R⁸ on each of the pentadienyl rings is hydrogen atom; X is a halogen, aliphatic hydrocarbon group of 1 to 8 carbon atoms or aromatic hydrocarbon group of 6 to 10 carbon atoms; and M is a metal of Ti, Zr or Hf.

The specific examples of the monocrosslinked metallocene compounds include CH₂CH₂(methylcyclopentadienyl)₂ZrBr₂, (CH₃)₂Si(cyclopentadienyl)(dimethylcyclopentadienyl)₂ZrBr₂, (C₆H₅)C(ethylcyclopentadienyl)₂ZrCl₂, CH₂CH₂CH₂(ethylcyclopentadienyl)(trimethylcyclopentadienyl)Zr(methyl)₂, CH₂CH₂(i-propylcyclopentadienyl)₂ZrCl₂, (CH₃)₂Si(i-propylcyclopentadienyl)₂ZrI₂, (CH₃)₂Si(n-propylcyclopentadienyl)(tetramethylcyclopentadienyl)₂ZrCl₂, (CH₃)₂Si(n-propylcyclopentadienyl)₂Zr(phenyl)₂, (C₆H₅)₂Si(n-butylcyclopentadienyl)₂ZrCl₂, (CH₃)₂Si(i-butylcyclopentadienyl)₂Zr(benzyl)₂, CH₂CH₂(methylcyclopentadienyl)(i-butylcyclopentadienyl)Zr(methyl)₂, (CH₃)₂Si(s-butylcyclopentadienyl)₂Zr(benzyl)₂, (CH₃)₂Si(t-butylcyclopentadienyl)₂ZrCl₂, (CH₃)₂Si(t-butylcyclopentadienyl)₂ZrBr₂, (CH₃)₂Si(neopentylcyclopentadienyl)₂ZrCl₂, (CH₃)₂Si(neopentylcyclopentadienyl)(dimethylcyclopentadienyl)Zr(methyl)₂, (CH₃)₂Si(cyclopentylcyclopentadienyl)₂ZrCl₂, (CH₃)₂Si(cyclopentylcyclopentadienyl)₂ZrI₂, (CH₃)₂Si(n-hexylcyclopentachenyl)₂ZrCl₂, (CH₃)₂Si(n-hexylcyclopentadienyl)₂Zr(phenyl)₂, (CH₃)₂Si(cyclohexylcyclopentadienyl)₂ZrCl₂, (CH₃)₂Si(cyclohexylcyclopentadienyl)₂Zr(methyl)₂, (CH₃)₂Si(phenylcyclopentadienyl)₂ZrCl₂, (CH₃)₂Si(dimethylcyclopentadienyl)₂ZrCl₂, (CH₃)₂Si(dimethylcyclopentadienyl)₂ZrBr₂, (CH₃)₂Si(dimethylcyclopentadienyl)(diethylcyclopentadienyl)₂Zrl₂, (CH₃)₂Si(methylpropylcyclopentadienyl)₂Zr(methyl)₂, (CH₃)₂Si(dipropylcyclopentadienyl)₂Zr(phenyl)₂, (CH₃)₂Si(diphenylcyclopentadienyl)₂Zr(benzyl)₂, CH₂CH₂CH₂(indenyl)₂ZrCl₂, (CH₃)₂Si(trimethylcyclopentadienyl)₂ZrCl₂, CH₂CH₂CH₂(indenylmethyl)₂ZrCl₂, (CH₃)₄Si₂(cyclopentadienyl)(tetramethylcyclopentadienyl)ZrCl₂, CH₂CH₂CH₂(methylcyclopentadienyl)(fluorenyl)ZrCl₂, CH₂CH₂(methylcyclopentadienyl)₂HfBr₂, (CH₃)₂Si(cyclopentadienyl)(dimethylcyclopentadienyl)₂HfBr₂, (C₆H₅)C(ethylcyclopentadienyl)₂HfCl₂, CH₂CH₂CH₂(ethylcyclopentadienyl)(trimethylcyclopentadienyl)Hf(methyl)₂, CH₂CH₂(i-propylcyclopentadienyl)₂HfCl₂, (CH₃)₂Si(i-propylcyclopentadienyl)₂Hfl₂, (CH₃)₂Si(n-propylcyclopentadienyl)(tetramethylcyclopentadienyl)₂HfCl₂, (CH₃)₂Si(n-propylcyclopentadienyl)₂Hf(phenyl)₂, (C₆H₅)₂Si(n-butylcyclopentadienyl)₂HfCl₂, (CH₃)₂Si(i-butylcyclopentactienyl)₂Hf(benzyl)₂, CH₂CH₂(methylcyclopentadienyl)(i-butylcyclopentadienyl)Hf(methyl)₂, (CH₃)₂Si(s-butylcyclopentadienyl)₂Hf(benzyl)₂, (CH₃)₂Si(t-butylcyclopentadienyl)₂HfCl₂, (CH₃)₂Si(t-butylcyclopentadienyl)₂HfBr₂, (CH₃)₂Si(neopentylcyclopentadienyl)₂HfCl₂, (CH₃)₂Si(neopentylcyclopentadienyl)(dimethylcyclopentadienyl)Hf(methyl)₂, (CH₃)₂Si(cyclopentylcyclopentadienyl)₂HfCl₂, (CH₃)₂Si(cyclopentylcyclopentadienyl)₂Hfl₂, (CH₃)₂Si(n-hexylcyclopentadienyl)₂HfCl₂, (CH₃)₂Si(n-hexylcyclopentadienyl)₂Hf(phenyl)₂, (CH₃)₂Si(cyclohexylcyclopentadienyl)₂HfCl₂, (CH₃)₂Si(cyclohexylcyclopentadienyl)₂Hf(methyl)₂, (CH₃)₂Si(phenylcyclopentadienyl)₂HfCl₂, (CH₃)₂Si(dimethylcyclopentadienyl)₂HfCl₂, (CH₃)₂Si(dimethylcyclopentadienyl)₂HfBr₂, (CH₃)₂Si(dimethylcyclopentadienyl)(diethylcyclopentadienyl)₂Hfl₂, (CH₃)₂Si(methylpropylcyclopentadienyl)₂Hf(methyl)₂, (CH₃)₂Si(dipropylcyclopentadienyl)₂Hf(phenyl)₂, (CH₃)₂Si(diphenylcyclopentadienyl)₂Hf(benzyl)₂, CH₂CH₂CH₂(indenyl)₂HfCl₂, (CH₃)₂Si(trimethylcyclopentadienyl)₂HfCl₂, CH₂CH₂CH₂(indenylmethyl)₂HfCl₂, (CH₃)₄Si₂(cyclopentadienyl)(tetramethylcyclopentadienyl)HfCl₂, CH₂CH₂CH₂(methylcyclopentadienyl)(fluorenyl)HfCl₂, CH₂CH₂(methylcyclopentadienyl)₂TiBr₂, (CH₃)₂Si(cyclopentadienyl)(dimethylcyclopentadienyl)₂TiBr₂, (C₆H₅)C(ethylcyclopentadienyl)₂TiCl₂ CH₂CH₂CH₂(ethylcyclopentadienyl)(trimethylcyclopentadienyl)Ti(methyl)₂, CH₂CH₂(i-propylcyclopentadienyl)₂TiCl₂ (CH₃)₂Si(i-propylcyclopentadienyl)₂TiI₂, (CH₃)₂Si(n-propylcyclopentadienyl)(tetramethylcyclopentadienyl)₂TiCl₂, (CH₃)₂Si(n-propylcyclopentadienyl)₂Ti(phenyl)₂, (C₆H₅)₂Si(n-butylcyclopentadienyl)₂TiCl₂, (CH₃)₂Si(i-butylcyclopentadienyl)₂Ti(benzyl)₂, CH₂CH₂(methylcyclopentadienyl)(i-butylcyclopentadienyl)Ti(methyl)₂, (CH₃)₂Si(s-butylcyclopentadienyl)₂Ti(benzyl)₂, (CH₃)₂Si(t-butyleyclopentadienyl)₂Ticl₂, (CH₃)₂Si(t-butylcyclopentadienyl)₂TiBr₂, (CH₃)₂Si(neopentylcyclopentadienyl)₂TiCl₂, (CH₃)₂Si(neopentylcyclopentadienyl)(dimethylcyclopentadienyl)Ti(methyl)₂, (CH₃)₂Si(cyclopentylcyclopentadienyl)₂TiCl₂, (CH₃)₂Si(cyclopentylcyclopentadienyl)₂TiI₂, (CH₃)₂Si(n-hexylcyclopentadienyl)₂TiCl₂, (CH₃)₂Si(n-hexylcyclopentadienyl)₂Ti(phenyl)₂, (CH₃)₂Si(cyclohexylcyclopentadienyl)₂TiCl₂, (CH₃)₂Si(cyclohexylcyclopentadienyl)₂Ti(methyl)₂, (CH₃)₂Si(phenylcyclopentadienyl)₂TiCl₂, (CH₃)₂Si(dimethylcyclopentadienyl)₂TiCl₂, (CH₃)₂Si(dimethylcyclopentadienyl)₂TiBr₂, (cH₃)₂si(dimethylcyclopentadienyl)(diethylcyclopentadienyl)₂TiI₂, (CH₃)₂Si(methylpropylcyclopentadienyl)₂Ti(methyl)₂, (CH₃)₂Si(dipropylcyclopentadienyl)2Ti(phenyl)₂, (CH₃)₂Si(diphenylcyclopentadienyl)₂Ti(benzyl)₂, CH₂CH₂CH₂(indenyl)₂TiCl₂, (CH₃)₂Si(trimethylcyclopentadienyl)₂TiCl₂, CH₂CH₂CH₂(indenylmethyl)₂TiCl₂, (CH₃)₄Si₂(cyclopentadienyl)(tetramethylcyclopentadienyl)TiCl₂ and CH₂CH₂CH₂(methylcyclopentadienyl)(fluorenyl)TiCl₂.

The dicrosslinked metallocene compounds include those represented by the general formula (10):

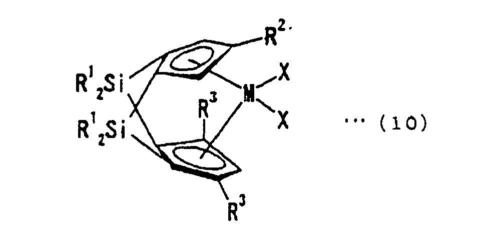

In the general formula (10), R¹ to R³ are each hydrogen atom or an aliphatic hydrocarbon group of 1 to 8 carbon atoms; X is a halogen, aliphatic hydrocarbon group of 1 to 8 carbon atoms or aromatic hydrocarbon group of 6 to 10 carbon atoms; and M is a metal of Ti, Zr or Hf, where R¹ to R³ may be the same or different.

The specific examples of the dicrosslinked metallocene compounds include those described in J. Am. Chem. Soc. Vol. 121, No.3, 565 (1999).

More specifically, they include (1,2-Me₂Si)₂(η⁵-C₅H₃)₂ZrCl₂, (1,2-Me₂Si)₂(η⁵-C₅H₃)(η⁶-C₅H₂-3-CH₃)ZrCl₂, (1,2-Me₂Si)₂(η⁵-C₅H₃){η⁶-C₅H₂-3-(CH(CH₃))₂}ZrCl₂, (1,2-Me₂Si)₂(η⁵-C₅H₃){η⁵-C₅H-3,5-(CH(CH₃))₂}₂ZrCl₂, (1,2-Me₂Si)₂(η⁵-C₅H₂-4-CH₃){η⁵-C₅H-3,5-(CH(CH₃))₂}₂ZrCl₂, (1,2-Me₂Si)₂{(η⁵-C₆H₅-4-CH(CH₃)₃}{η⁵-C₅H-3,5-(CH(CH₃))₂}₂ZrCl₂, (1,2-Me₂Si)₂{η⁵-C₅H₂-4-Si(CH₃)₃}{η⁵-C₅H-3,5-(CH(CH₃))₂}₂ZrCl₂, (1,2-(C₆H₅)₂Si)₂{η⁵-C₅H₂-4-Si(CH₃)₃}{η⁵-C₅H-3,5-(CH(CH₃))₂}₂ZrCl₂, (1,2-Me₂Si)₂{(η⁵-C₅H₂-4-Si(CH₃)₃}{η⁵-C₅H-3,5-(CH(CH₃))₂}₂Zr(CH₃)₂, (1,2-Me₂Si)₂(η⁵-C₅H₃)₂HfCl₂, (1,2-Me₂Si)₂(η⁵-C₅H₃)(η⁵-C₅H₂-3-CH₃)HfCl₂, (1,2-Me₂Si)₂(η⁵-C₅H₃)₂-TiCl₂ and (1,2-Me₂Si)₂(η⁵-C₅H₃)(η⁵-C₅H₂-3-CH₃)TiCl₂.

Aluminoxanes and boron compounds may be used either individually or in combination with an organoaluminum compound. They may be the same as those used for the catalyst (I) or (II).

In the catalyst, the metallocene compound is incorporated at 5.0 x 10⁻⁷ to 5.0 x 10⁻³ mols, preferably 1.0 x 10⁻⁶ to 1.0 x 10⁻⁴ mols, and aluminoxane, boron compound or organoaluminum compound at 1.0 x 10⁻⁵ to 5.0 mols, preferably 1.0 x 10⁻³ to 0.1 mols, each per mol of the monomer used.

The polymerization is carried out at -100 to 150°C for 0.1 to 100 hours, preferably at -70 to 100°C for 1 to 50 hours.

The diimine complexes of nickel, palladium or the like for the catalyst (IV) composed of a diimine complex of nickel, palladium or the like and an aluminoxane include those compounds represented by one of the general formulae (11) to (14).

The aluminoxanes include methyl aluminoxane, ethyl aluminoxane and butyl aluminoxane.

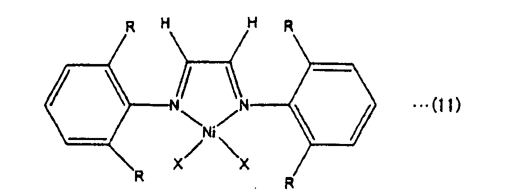

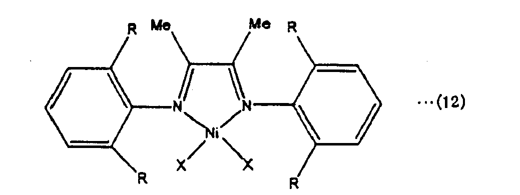

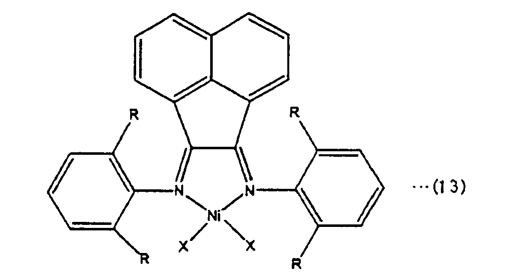

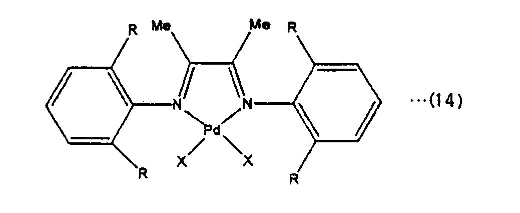

In the general formulae (11) to (14), X is Cl or methyl (Me) group; and R is methyl (Me) or isopropyl (iPr) group, where Rs may be the same or different.

In the catalyst, the diimine complex of nickel, palladium or the like is incorporated at 1 x 10⁻⁶ to 0.1 mols, preferably 5 x 10⁻⁶ to 5 x 10⁻² mols, and aluminoxane at 1 × 10⁻⁶ to 0.1 mols, preferably 5 x 10⁻⁴ to 0.05 mols, each per mol of the monomer used.

The polymerization is carried out at -100 to 90°C for 0.5 to 100 hours, preferably at-50 to 50°C for 1 to 50 hours.

The phenoxyimine complexes of titanium, zirconium, hafnium or the like for the catalyst (V) composed of a phenoxyimine complex of titanium, zirconium, hafnium or the like, and an aluminoxane include those compounds represented by the general formula (15).

The aluminoxanes include methyl aluminoxane, ethyl aluminoxane and butyl aluminoxane.

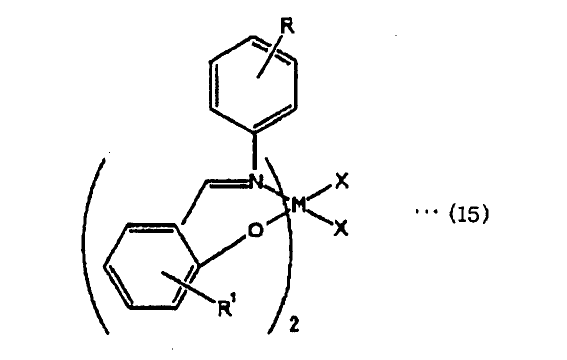

In the general formulae (15), M is titanium, zirconium or hafnium; R and R' are each a hydrocarbon group of 1 to 10 carbon atoms; and X is F, Cl, Br, I or an alkoxy group of 1 to 8 carbon atoms.

The phenoxyimine complex of titanium, zirconium, hafnium or the like is incorporated at 1 x 10⁻⁶ to 0.1 mols, preferably 5 x 10⁻⁶ to 5 × 10⁻² mols, and aluminoxane at 1 × 10⁻⁶ to 0.1 mols, preferably 5 x 10⁻⁴ to 0.05 mols, each per mol of the monomer used.

The polymerization is carried out at 0 to 200°C for 0.5 to 100 hours, preferably at 50 to 150°C for 1 to 50 hours.

The pyrroleimine complexes of titanium or the like for the catalyst (VI) composed of a pyrroleimine complex of titanium or the like and an aluminoxane include those compounds represented by the general formula (16).

The aluminoxanes include methyl aluminoxane, ethyl aluminoxane and butyl aluminoxane..

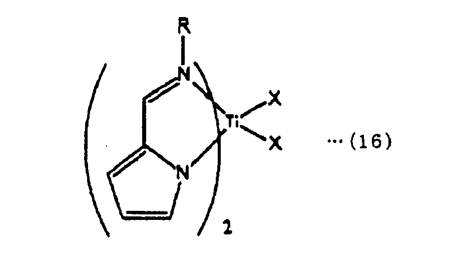

In the general formulae (16), X is F, Cl, Br, I or an alkoxy group of 1 to 8 carbon atoms; and R is phenyl group or an alkyl group of 1 to 10 carbon atoms.

In the catalyst, the pyrroleimine complex of titanium or the like is incorporated at 1 x 10⁻⁶ to 0.1 mols, preferably 5 x 10⁻⁶ to 5 x 10⁻² mols, and aluminoxane at 1 x 10⁻⁶ to 0.1 mols, preferably 5 x 10⁻⁴ to 0.05 mols, each per mol of the monomer used.

The polymerization is carried out at 0 to 200°C for 0.5 to 100 hours, preferably at 50 to 150°C for 1 to 50 hours.

The compounds for the catalyst (VII), which is composed of at least one complex selected from the group consisting of an alkoxy complex, alkyl amide complex and acetylacetone complex of Ti, Zr or Hf, and an aluminoxane, boron compound or organoaluminum compound include those represented by one of the general formulae (17) to (22).

M(OR)ₐX₄₋ₐ (17)

M(NR₂)ₐX₄₋ₐ (18)

M(acac)₂X₂ (19)

[OR⁴O]MX₂ (20)

[OR⁴N(R⁵)]MX₂ (21)

[N(R⁵)R⁴N(R⁵)]MX₂ (22)

In the general formulae (17) to (22), M is a metal of Ti, Zr or Hf X is F, Cl, Br or I; R is a hydrocarbon group of 1 to 10 carbon atoms; R⁴ is a divalent aromatic, alicyclic or aliphatic hydrocarbon group, or divalent group containing an element other than C or H, e.g., oxygen, nitrogen or silicon; R⁵ is a monovalent aromatic, alicyclic or aliphatic hydrocarbon group; acac is acetylacetone, methylbutanedion, butanedion, benzoylacetone, benzoyltrifluoroacetone, dibenzoylmethane, fluoylacetone, trifluoroacetylacetone, 3-phenylacetylacetone, 2,4-hexanedion or trifluorodimethyl-2,4-hexanedion ligand and the like; and "a" is an integer of 2 to 4.

The examples of the hydrocarbon groups R⁴ include a divalent saturated hydrocarbon group represented by -CₙH₂ₙ-, divalent unsaturated aliphatic hydrocarbon group represented by -CₙH₂ₙ₋₂- or -CₙH₂ₙ₋₄-, divalent alicyclic hydrocarbon group represented by -cycloCₘH₂ₘ₋₂- and divalent hydrocarbon group containing an aromatic ring. In these formulae, "n" is an integer of 1 to 10, preferably 2 to 5, and "m" is an integer of 5 to 15, preferably 8 to 12. The saturated hydrocarbon group may be linear or branched. The branched ones include dialkylmethylene group (R₂C=), -CH(R)CH(R)- and -CH(R)CH₂CH(R)-. R⁴ may be an oxygen- or nitrogen-containing group, e.g., -(CH₂)ₙO(CH₂)ₙ-, -(CH₂)ₙNR(CH₂)ₙ- or -C₆H₄OC₆H₄-, or silicon-containing group, e.g., dialkylsilylene group (R₂SiC=). Of these, a divalent saturated hydrocarbon groups represented by -CₙH₂ₙ- is more preferable.

The specific examples of the compounds represented by M(OR)ₐX₄₋ₐ, M(NR₂)ₐX₄₋ₐ or M(acac)₂X₂ of the general formula (17), (18) or (19) include Ti(OC₂H₅)₄, Ti(On-C₃H₇)₄, Ti(Oi-C₃H₇)₄, Ti(On-C₄H₉)₄, Ti(Oi-C₄H₉)₄, Ti(O_{S}-C₄H₉)₄, Ti(Ot-C₄H₉)₄, Ti(OcycloC₅H₉)₄, Ti(OC₅H₁₁)₄, Ti(OC₆H₅)₄, Ti(OcycloC₆H₁₁)₄, Ti(OC₆H₁₃)₄, Ti(OC₂H₅)₂Cl₂, Ti(Oi-C₃H₇)₂Cl₂, Ti(On-C₃H₇)₂Br₂, Ti(On-C₄H₉)₂Cl₂, Ti(Oi-C₄H₉)₂Br₂, Ti(Os-C₄H₉)₂I₂, Ti(OC₅H₁₁)₂Cl₂, Ti(OcycloC₆H₁₁)₂F₂, Ti[N(C₂H₅)₂]₄, Ti[N(n-C₃H₇)₂]₄, Ti[N(i-C₃H₇)₂]₄, Tï[N(n-C₄H₉)₂]₄, Tï[N(i-C₄H₉)₂]₄, Tï[N(s-C₄H₉)₂]₄, Ti[N(t-C₄H₉)₂]₄, Ti[N(cycloC₅H₉)₂]₄, Ti[N(C₅H₁₁)₂]₄, Ti(N(C₆H₅)₂]₄, Ti[N(cycloC₆H₁₁)₂]₄, Ti[N(C₆H₁₃)₂]₄, Ti[N(C₂H₅)₂]₂Cl₂, Ti[N(n-C₃H₇)₂]₂Cl₂, Ti[N(i-C₃H₇)₂]₂Br₂, Ti[N(s-C₄H₉)₂]₂Cl₂, Tï[N(n-C₄H₉)₂]₂Br₂, Ti[N(t-C₄H₉)₂]₂I₂, Ti[N(C₅H₁₁)₂]₂F₂, Ti[N(C₅H₁₁)₂]₂Cl₂, Ti(acetylacetonate)₂Cl₂, Ti(methylbutanedionate)₂Cl₂, Ti(butanedionate)₂Cl₂, Ti(benzoylacetonate)₂Br₂, Ti(benzoyltrifluoroacetonate)₂F₂, Ti(dibenzoylmethanate)₂I₂, Ti(furoylacetonate)₂Br₂, Ti(trifluoroacetylacetonate)₂Br₂, Ti(2,4-hexanedionate)₂Cl₂, Zr(OC₂H₅)₄, Zr(On-C₃H₇)₄, Zr(Oi-C₃H₇)₄, Zr(On-C₄H₉)₄, Zr(Oi-C₄H₉)₄, Zr(Os-C₄H₉)₄, Zr(Ot-C₄H₉)₄, Zr(OcycloC₅H₉)₄, Zr(OC₅H₁₁)₄, Zr(OC₆H₅)₄, Zr(OcycloC₆H₁₁)₄, Zr(OC₆H₁₃)₄, Zr(OC₂H₅)₂Cl₂, Zr(Oi-C₃H₇)₂Cl₂, Zr(On-C₃H₇)₂Br₂, Zr(On-C₄H₉)₂Cl₂, Zr(Oi-C₄H₉)₂Br₂, Zr(Os-C₄H₉)₂I₂, Zr(OC₅H₁₁)₂Cl₂, Zr(OcycloC₆H₁₁)₂F₂, Zr[N(C₂H₅)₂]₄, Zr[N(n-C₃H₇)₂]₄, Zr[N(i-C₃H₇)₂]₄, Zr[N(n-C₄H₉)₂]₄, Zr[N(i-C₄H₉)₂]₄, Zr[N(s-C₄H₉)₂]₄, Zr[N(t-C₄H₉)₂]₄, Zr[N(cycloC₅H₉)₂]₄, Zr[N(C₅H₁₁)₂]₄, Zr[N(C₆H₅)₂]₄, Zr[N(cycloC₆H₁₁)₂]₄, Zr[N(C₆H₁₃)₂]₄, Zr[N(C₂H₅)₂]₂Cl₂, Zr[N(n-C₃H₇)₂]₂Cl₂, Zr[N(i-C₃H₇)₂]₂Br₂, Zr[N(s-C₄H₉)₂]₂Cl₂, Zr[N(n-C₄H₉)₂]₂Br₂, Zr[N(t-C₄H₉)₂]₂I₂, Zr[N(C₅H₁₁)₂]₂F₂, Zr[N(C₅H₁₁)₂]₂Cl₂, Zr(acetylacetonate)₂Cl₂, Zr(methylbutanedionate)₂Cl₂, Zr(butanedionate)₂Cl₂, Zr(benzoylacetonate)₂Br₂, Zr(benzoyltrifluoroacetonate)₂F₂, Zr(dibenzoylmethanate)₂I₂, Zr(furoylacetonate)₂Br₂, Zr(trifluoroacetylacetonate)₂Br₂, Zr(2,4-hexanedionate)₂Cl₂, Hf(OC₂H₅)₄, Hf(On-C₃H₇)₄, Hf(Oi-C₃H₇)₄, Hf(On-C₄H₉)₄, Hf(Oi-C₄H₉)₄, Hf(Os-C₄H₉)₄, Hf(Ot-C₄H₉)₄, Hf(OcycloC₅H₉)₄, Hf(OC₅H₁₁)₄, Hf(OC₆H₅)₄, Hf(OcycloC₆H₁₁)₄, Hf(OC₆H₁₃)₄, Hf(OC₂H₅)₂Cl₂, Hf(Oi-C₃H₇)₂Cl₂, Hf(On-C₃H₇)₂Br₂, Hf(On-C₄H₉)₂Cl₂, Hf(Oi-C₄H₉)₂Br₂, Hf(Os-C₄H₉)₂I₂, Hf(OC₅H₁₁)₂Cl₂, Hf(OcycloC₆H₁₁)₂F₂, Hf[N(C₂H₅)₂]₄, Hf[N(n-C₃H₇)₂]₄, Hf[N(i-C₃H₇)₂]₄, Hf[N(n-C₄H₉)₂]₄, Hf[N(i-C₄H₉)₂]₄, Hf[N(s-C₄H₉)₂]₄, Hf[N(t-C₄H₉)₂]₄, Hf[N(cycloC₅H₉)₂]₄, Hf[N(C₅H₁₁)₂]₄, Hf[N(C₆H₅)₂]₄, Hf[N(cycloC₆H₁₁)₂]₄, Hf[N(C₆H₁₃)₂]₄, Hf[N(C₂H₅)₂]₂Cl₂, Hf[N(n-C₃H₇)₂]₂Cl₂, Hf[N(i-C₃H₇)₂]₂Br₂, Hf[N(s-C₄H₉)₂]₂Cl₂, Hf[N(n-C₄H₉)₂]₂Br₂, Hf[N(t-C₄H₉)₂]₂I₂, Hf[N(C₅H₁₁)₂]₂F₂, Hf[N(C₅H₁₁)₂]₂Cl₂, Hf(acetylacetonate)₂Cl₂, Hf(methylbutanedionate)₂Cl₂, Hf(butanedionate)₂Cl₂, Hf(benzoylacetonate)₂Br₂, Hf(benzoyltriiluoroacetonate)₂F₂, Hf(dibenzoylmethanate)₂I₂, Hf(furoylacetonate)₂Br2, Hf(trifluoroacetylacetonate)₂Br₂ and Hf(2,4-hexanedionate)₂Cl₂.

The specific examples of the compounds represented by [OR⁴O]MX₂ of the general formula (20) include [OCH₂CH₂O]TiCl₂, [OCH₂CH₂CH₂O]TiCl₂, [OCH₂CH₂CH₂CH₂O]TiCl₂, [OCH₂CH₂OCH₂CH₂O]TiCl₂, [OCH₂CH₂O]Ti(CH₃)₂, [OCH₂CH₂CH₂O]Ti(CH₃)₂, [OCH₂CH₂CH₂CH₂O]Ti(CH₃)₂, [OCH₂CH₂OCH₂CH₂O]Ti(CH₃)₂, [OCH₂CH₂O]Ti(C₆H₅)₂, [OCH₂CH₂CH₂O]Ti(C₆H₅)₂, [OCH₂CH₂CH₂CH₂O]Ti(C₆H₅)₂, [OCH₂CH₂OCH₂CH₂O]Ti(C₆H₅)₂, [OCH₂CH₂O]Ti(CH₂C₆H₅)₂, [OCH₂CH₂CH₂O]Ti(CH₂C₆H₅)₂, [OCH₂CH₂CH₂CH₂O]Ti(CH₂C₆H₅)₂, [OCH₂CH₂OCH₂CH₂O]Ti(CH₂C₆H₅)₂, [OCH(C₆H₅)CH(C₆H₅)O]Ti(CH₃)₂, [OCH₂C(C₆H₅)₂CH₂O]Ti(CH₃)₂, [OCH₂CH₂O]ZrCl₂, [OCH₂CH₂CH₂O]ZrCl₂, [OCH₂CH₂CH₂CH₂O]ZrCl₂, [OCH₂CH₂OCH₂CH₂O]ZrCl₂, [OCH₂CH₂O]Zr(CH₃)₂, [OCH₂CH₂CH₂O]Zr(CH₃)₂, [OCH₂CH₂CH₂CH₂O]Zr(CH₃)₂, [OCH₂CH₂OCH₂CH₂O]Zr(CH₃)₂, [OCH₂CH₂O]Zr(C₆H₅)₂, [OCH₂CH₂CH₂O]Zr(C₆H₅)₂, [OCH₂CH₂CH₂CH₂O]Zr(C₆H₅)₂, [OCH₂CH₂OCH₂CH₂O]Zr(C₆H₅)₂, [OCH₂CH₂O]Zr(CH₂C₆H₅)₂, [OCH₂CH₂CH₂O]Zr(CH₂C₆H₅)₂, [OCH₂CH₂CH₂CH₂O]Zr(CH₂C₆H₅)₂, [OCH₂CH₂OCH₂CH₂O]Zr(CH₂C₆H₅)₂, [OCH(C₆H₅)CH(C₆H₅)O]Zr(CH₃)₂, [OCH₂C(C₆H₅)₂CH₂O]Zr(CH₃)₂, [OCH₂CH₂O]HfCl₂, [OCH₂CH₂CH₂O]HfCl₂, [OCH₂CH₂CH₂CH₂O]HfCl₂, [OCH₂CH₂OCH₂CH₂O]HfCl₂, [OCH₂CH₂O]Hf(CH₃)₂, [OCH₂CH₂CH₂O]Hf(CH₃)₂, [OCH₂CH₂CH₂CH₂O]Hf(CH₃)₂, [OCH₂CH₂OCH₂CH₂O]Hf(CH₃)₂, [OCH₂CH₂O]Hf(C₆H₅)₂, [OCH₂CH₂CH₂O]Hf(C₆H₅)₂, [OCH₂CH₂CH₂CH₂O]Hf(C₆H₅)₂, [OCH₂CH₂OCH₂CH₂O]Hf(C₆H₅)₂, [OCH₂CH₂O]Hf(CH₂C₆H₅)₂, [OCH₂CH₂CH₂O]Hf(CH₂C₆H₅)₂, [OCH₂CH₂CH₂CH₂O]Hf(CH₂C₆H₅)₂, [OCH₂CH₂OCH₂CH₂O]Hf(CH₂C₆H₅)₂, [OCH(C₆H₅)CH(C₆H₅)O]Hf(CH₃)₂ and [OCH₂C(CeH₅)₂CH₂O]Hf(CH₃)₂.

The specific examples of the compounds represented by [OR⁴N(R⁵)]MX₂ of the general formula (21) include [OCH₂CH₂N(CH₃)]TiCl₂, [OCH₂CH₂CH₂N(C₆H₅)]TiCl₂, [OCH₂CH₂CH₂CH₂N((i-C₃H₇)₂C₆H₃)]TiCl₂, [OCH₂CH₂OCH₂CH₂N(cycloC₆H₁₁₎]TiCl₂, [OCH₂CH₂N(CH₃)]Ti(CH₃)₂, [OCH₂CH₂CH₂N(C₆H₅)]Ti(CH₃)₂, [OCH₂CH₂CH₂CH₂N((i-C₃H₇)₂C₆H₃)]Ti(CH₃)₂, [OCH₂CH₂OCH₂CH₂N(cycloC₆H₁₁)]Ti(CH₃)₂, [OCH₂CH₂N(CH₃)]Ti(C₆H₅)₂, [OCH₂CH₂CH₂N(C₆H₅)]Ti(C₆H₅)₂, [OCH₂CH₂CH₂CH₂N((i-C₃H₇)₂C₆H₃)]Ti(C₆H₅)₂, [OCH₂CH₂OCH₂CH₂N(CH₃)]Ti(C₆H₅)₂, [OCH₂CH₂N(i-C₃H₇)]Ti(CH₂C₆H₅)₂, [OCH₂CH₂CH₂N(n-C₆H₁₃)]Ti(CH₂C₆H₅)₂, [OCH₂CH₂CH₂CH₂N(C₆H₅)]Ti(CH₂C₆H₅)₂, [OCH₂CH₂OCH₂CH₂N((i-C₃H₇)₂C₆H₃)]Ti(CH₂C₆H₅)₂, [OCH(C₆H₅)CH(C₆H₅)N(i-C₆H₇)]Ti(CH₅)₂, [OCH₂C(C₆H₅)₂CH₂N(C₂H₅)]Ti(CH₃)₂, [OCH₂CH₂N(CH₃)]ZrCl₂, [OCH₂CH₂CH₂N(C₆H₅)]ZrCl₂, [OCH₂CH₂CH₂CH₂N((i-C₃H₇)₂C₆H₃)]ZrCl₂, [OCH₂CH₂OCH₂CH₂N(cycloC₆H₁₁)]ZrCl₂, [OCH₂CH₂N(CH₃)]Zr(CH₃)₂, [OCH₂CH₂CH₂N(C₆H₅)]Zr(CH₃)₂, [OCH₂CH₂CH₂CH₂N((i-C₃H₇)₂C₆H₃)]Zr(CH₃)₂, [OCH₂CH₂OCH₂CH₂N(cycloC₆H₁₁)]Zr(CH₃)₂, [OCH₂CH₂N(CH₃)]Zr(C₆H₅)₂, [OCH₂CH₂CH₂N(C₆H₅)]Zr(C₆H₅)₂, [OCH₂CH₂CH₂CH₂N((i-C₃H₇)₂C₆H₃)]Zr(C₆H₅)₂, [OCH₂CH₂OCH₂CH₂N(CH₃)]Zr(C₆H₅)₂, [OCH₂CH₂N(i-C₃H₇)]Zr(CH₂C₆H₅)₂, [OCH₂CH₂CH₂N(n-C₆H₁₃)]Zr(CH₂C₆H₅)₂, [OCH₂CH₂CH₂CH₂N(C₆H₅)]Zr(CH₂C₆H₅)₂, [OCH₂CH₂OCH₂CH₂N((i-C₃H₇)₂C₆H₃)]Zr(CH₂C₆H₅)₂, [OCH(C₆H₅)CH(C₆H₅)N(i-C₃H₇)]Zr(CH₃)₂, [OCH₂C(C₆H₅)₂CH₂N(C₆H₅)]Zr(CH3)₂, [OCH₂CH₂N(CH₃)]HfCl₂, [OCH₂CH₂CH₂N(C₆H₅)]HfCl₂, [OCH₂CH₂CH₂CH₂N((i-C₃H₇)₂C₆H₃)]HfCl₂, [OCH₂CH₂OCH₂CH₂N(cycloC₆H₁₁)]HfCl₂, [OCH₂CH₂N(CH₃)]Hf(CH₃)₂, [OCH₂CH₂CH₂N(C₆H₅)]Hf(CH₃)₂, [OCH₂CH₂CH₂CH₂N((i-C₃H₇)₂C₆H₃)]Hf(CH₃)₂, [OCH₂CH₂OCH₂CH₂N(cycloC₆H₁₁)]HF(CH₃)₂, [OCH₂CH₂N(CH₃)]Hf(C₆H₅)₂, [OCH₂CH₂CH₂N(C₆H₅)]Hf(C₆H₅)₂, [OCH₂CH₂CH₂CH₂N((i-C₃H₇)₂C₆H₃)]Hf(C₆H₅)₂, [OCH₂CH₂OCH₂CH₂N(CH₃)]Hf(C₆H₅)₂, [OCH₂CH₂N(i-C₃H₇)]Hf(CH₂C₆H₅)₂, [OCH₂CH₂CH₂N(n-C₆H₁₃)]Hf(CH₂C₆H₃)₂, [OCH₂CH₂CH₂CH₂N(C₆H₅)]Hf(CH₂C₆H₅)₂, [OCH₂CH₂OCH₂CH₂N((i-C₃H₇)₂C₆H₃)]Hf(CH₂C₆H₅)₂, [OCH(C₆H₅)CH(C₆H₅)N(i-C₃H₇)]Hf(CH₃)₂ and [OCH₂C(C₆H₅)₂CH₂N(C₆H₅)]Hf(CH₃)₂.

The specific examples of the compounds represented by [N(R⁵)R⁴N(R⁵)]MX₂ of the general formula (22) include [N(CH₃)CH₂CH₂N(CH₃)]TiCl₂, [N((i-C₃H₇)₂C₆H₃)CH₂CH₂CH₂N((i-C₃H₇)₂C₆H₃)]TiCl₂, [N(C₆H₅)CH₂CH₂CH₂CH₂N(C₆H₅)]TiCl₂, [N(cycloC₆H₁₁)CH₂CH₂OCH₂CH₂N(cycloC₆H₁₁)]TiCl₂, [N(CH₃)CH₂CH₂N(CH₃)]Ti(CH₃)₂, [N(C₆H₅)CH₂CH₂CH₂N(C₆H₅)]Ti(CH₃)₂, [N((i-C₃H₇)₂C₆H₃)CH₂CH₂CH₂CH₂N((i-C₃H₇)₂C₆H₃)]Ti(CH₃)₂, [N(cycloC₆H₁₁)CH₂CH₂OCH₂CH₂N(cycloC₆H₁₁)]Ti(CH₃)₂, [N(CH₃)CH₂CH₂N(CH₃)]Ti(C₆H₅)₂, [N(C₆H₅)CH₂CH₂CH₂N(C₆H₅)]Ti(C₆H₅)₂, [N((i-C₃H₇)₂C₆H₃)CH₂CH₂CH₂N((i-C₃H₇)₂C₆H₃)]Ti(C₆H₅)₂, [N(CH₃)CH₂CH₂OCH₂CH₂N(CH₃)]Ti(C₆H₅)₂, [N(i-C₃H₇)CH₂CH₂N(i-C₃H₇)]Ti(CH₂C₆H₅)₂, [N(n-C₆H₁₃)CH₂CH₂CH₂N(n-C₆H₁₃)]Ti(CH₂C₆H₅)₂, [N(C₆H₅)CH₂CH₂CH₂CH₂N(C₆H₅)]Ti(CH₂C₆H₅)₂, [N((i-C₃H₇)₂C₆H₃)CH₂CH₂OCH₂CH₂N((i-C₃H₇)₂C₆H₃)]Ti(CH₂C₆H₅)₂, [N(i-C₃H₇)CH(C₆H₅)CH(C₆Hs)N(i-C3H₇)]Ti(CH3)₂, [N(C₆H₅)CH₂C(C₆H₅)₂CH₂N(C₆H₅)]Ti(CH₃)₂, [N(CH₃)CH₂CH₂N(CH₃)]ZrCl₂, [N((i-C₃H₇)₂C₆H₃)CH₂CH₂CH₂N(i-C₃H₇)₂C₆H₃]ZrCl₂, [N(C₆H₅)CH₂CH₂CH₂CH₂N(C₆H₅)]ZrCl₂, [N(cycloC₆H₁₁)CH₂CH₂OCH₂CH₂N(cycloC₆H₁₁)]ZrCl₂, [N(CH₃)CH₂CH₂N(CH₃)]Zr(CH₃)₂, [N(C₆H₅)CH₂CH₂CH₂N(CeH₅)]Zr(CH₃)₂, [N((i-C₃H₇)₂C₆H₃)CH₂CH₂CH₂CH₂N((i-C₃H₇)₂C₆H₃)]Zr(CH₃)₂, [N(cycloC₆H₁₁)CH₂CH₂OCH₂CH₂N(cycloC₆H₁₁)]Zr(CH₃)₂, [N(CH₃)CH₂CH₂N(CH₃)]Zr(C₆H₅)₂, [N(C₆H₅)CH₂CH₂CH₂N(C₆H₅)]Zr(C₆H₅)2, [N((i-C₃H₇)₂C₆H₃)CH₂CH₂CH₂N((i·C₃H₇)₂C₆H₃)]Zr(C₆H₅)₂, [N(CH₃)CH₂CH₂OCH₂CH₂N(CH₃)]Zr(C₆H₅)₂, [N(i-C₃H₇)CH₂CH₂N(i-C₃H₇)]Zr(CH₂C₆H₅)₂, [N(n·C₆H₁₃)CH₂CH₂CH₂N(n-C₆H₁₃)]Zr(CH₂C₆H₅)₂, [N(C₆H₅)CH₂CH₂CH₂CH₂N(C₆H₅)]Zr(CH₂C₆H₅)₂, [N((i-C₃H₇)₂C₆H₃)CH₂CH₂OCH₂CH₂N((i-C₃H₇)₂C₆H₃)]Zr(CH₂C₆H₅)₂, [N(i-C₃H₇)CH(C₆H₅)CH(C₆H₅)N(i-C₃H₇)]Zr(CH₃)₂, [N(C₆H₅)CH₂C(C₆H₅)₂CH₂N(C₆H₅)]Zr(CH₃)2, [N(CH₃)CH₂CH₂N(CH₃)]HfCl₂, [N((i-C₃H₇)₂C₆H₃)CH₂CH₂CH₂N((i-C₃H₇)₂C₆H₃)]HfCl₂, [N(C₆H₅)CH₂CH₂CH₂CH₂N(C₆H₅)]HfCl₂, [N(cycloC₆H₁₁)CH₂CH₂OCH₂CH₂N(cycloC₆H₁₁)]HfCl₂, [N(CH₃)CH₂CH₂N(CH₃)]Hf(CH₃)₂, [N(C₆H₅)CH₂CH₂CH₂N(C₆H₅)]Hf(CH₃)₂, [N((i-C₃H₇)₂C₆H₃)CH₂CH₂CH₂CH₂N((i-C₃H₇)₂C₆H₃)]Hf(CH₃)₂, [N(cycloC₆H₁₁)CH₂CH₂OCH₂CH₂N(cycloC₆H₁₁)]Hf(CH₃)₂, [N(CH₃)CH₂CH₂N(CH₃)]Hf(C₆H₅)₂, [N(C₆H₅)CH₂CH₂CH₂N(C₆H₅)]Hf(C₆H₅)₂, [N((i-C₃H₇)₂C₆H₃)CH₂CH₂CH₂N((i-C₃H₇)₂C₆H₃)]Hf(C₆H₅)₂, [N(CH₃)CH₂CH₂OCH₂CH₂N(CH₃)]Hf(C₆H₅)₂, [N(i-C₃H₇)CH₂CH₂N(i-C₃H₇)]Hf(CH₂C₆H₅)₂, [N(n-C₆H₁₃)CH₂CH₂CH₂N(n-CsHia)]Hf(CH₂C₆H₁₃)₂, [N(C₆H₅)CH₂CH₂CH₂CH₂N(C₆H₅)]Hf(CH₂C₆H₅)₂, [N((i-C₃H₇)₂C₆H₃)CH₂CH₂OCH₂CH₂N((i-C₃H₇)₂C₆H₃)]Hf(CH₂C₆H₅)₂, [N(i-C₃H₇)CH(C₆H₅)CH(C₆H₅)N(i-C₃H₇)]Hf(CH₃)₂ and [N(C₆H₅)CH₂C(C₆H₅)₂CH₂N(CeH₅)]Hf(CH₃)₂.

The same aluminoxanes, boron compounds and organoaluminum compounds as used for the catalyst (I) or (II) may be also used for the catalyst (VII).

In the catalyst, the metal complex is incorporated at 1 x 10⁻⁵ to 0.5 mols, preferably 1 x 10⁻⁴ to 0.1 mols, and aluminoxane, boron compound or organoaluminum compound at 1 x 10⁻⁶ to 0.5 mols, preferably 1 x 10⁻⁵ to 0.1 mols, each per mol of the monomer used.

The polymerization is carried out at -100 to 100°C for 0.5 to 50 hours, preferably at -80 to 80°C for 1 to 30 hours.

In the present invention, a polyolefin is produced in the presence of the above-described homogeneous metallic complex catalyst, preferably the catalysts (I) to (III), particularly preferably the catalyst (I). When one of the catalysts (I) to (VII) is used, hydrogen, diethyl zinc or a compound containing the Si-H bond can be incorporated as a molecular-weight adjustor. These catalysts may be supported by a carrier, e.g., silica, alumina, zirconia or titania.

The polymerization reaction may be carried out by a continuous or batch system, or a combination thereof. Therefore, the reactor may be tubular or a tank. Both may be used, as required, when the reaction is carried out in 2 or more stages. A tubular reactor, when adopted, may have a structure with the feed supplied at one end and effluent discharged from the other end, or with tubes connected to each other to form a loop.

### (PO1) polyolefin

In the present invention, the polyolefin is of low-crystallinity or amorphous, having a weight-average molecular weight (Mw) of 2,000 to 600,000, particularly preferably 5,000 to 400,000, and molecular weight distribution (Mw/Mn) of 1.01 to 3.0, particularly preferably 1.01 to 2.00.

The polyolefin is dissolved or dispersed in a solvent in this stage. The polyolefin, being of low-crystallinity or amorphous, has a racemic diad fraction [r], determined by ¹³C-NMR, of 0.12 to 0.88, preferably 0.51 to 0.88, still more preferably 0.54 to 0.84. A polyolefin having a racemic diad fraction [r] of below 0.12 or above 0.88 is not preferable for the present invention, because of its crystalline nature.

Racemic diad fraction [r] is determined by a method known to persons skilled in the art, i.e., from integrated intensities of the peaks due to a stereoregular structure, measured by ¹³C-NMR.

The method of the present invention preferably includes a step for removing the catalyst component from the olefin polymerization effluent solution, the step being described later. However, removal of the catalyst component is not essential, and the solution carrying the catalyst component may be subsequently dried.

### (ii) Drying step

This step dries the polyolefin solution to remove the solvent and low-boiling point components, e.g., lighter components. The dried polymer is in a molten state, suitable to be treated in the subsequent kneading/modification step.

The polyolefin solution may contain a polymerization terminator, in addition to the solvent. It may react with a modifier used in the modification step to deteriorate efficiency of polyolefin modification. It is therefore preferable to remove a polymerization terminator, in addition to the solvent and lighter components, before the modification step.

The polyolefin solution can be dried by being sprayed into hot wind, or by an evaporator for stretched thin films, drum or vent-equipped extrusion drier, of which the last means is most suitable for the present invention.

### (g) Drier

Next, a vent-equipped extrusion/kneading drier (hereinafter referred to simply as a vent-equipped extrusion drier) as a representative drier is described. It evaporates the solvent as a lower-boiling-point component of the polyolefin solution, while extruding the solution charged at one end of the casing (cylinder) to the other end, from which it is discharged, with stirring by an extrusion screw rotating in the cylinder.

A vent-equipped extrusion drier typically comprises a casing (cylinder) set almost horizontally, extrusion screw rotating in the cylinder, screw driver/reducer, polyolefin solution injection port (hopper as a connecting device) positioned at one end of the cylinder, device for supplying a medium for heating the solution charged into the cylinder, degassing vent opening provided on one side of the cylinder wall, and discharge port from which the dried/molten solution is discharged as the major components.

The extrusion screw may be of a mono-axle or multi-axle type. Multi-axle type screws may be classified into 3 types by gear engaging conditions; completely engaging, partly engaging and no engaging. Moreover, it may be rotated in one or more directions. A two-axle type is more suitable for the present invention, because it exhibits higher performance than a mono-axle type and is easier to maintain than a machine with screws rotating on 3 or more axles.

The extrusion screw preferably has flights spirally arranged on the rotating axle. The flight shape is not limited. It may be provided with one or more notches or projections on part of the periphery. The notch can help secure residence time sufficiently, and projection can scrape off polymer deposited on the inner cylinder wall. A screw-equipped heater/cooler, disclosed by JP-A 6-23253, can be cited as one example of an extrusion screw of the above structure.

The extrusion drier with a cylinder heated inside may be heated by a medium circulating in a jacket provided over the casing, or supplied into the casing, the latter being more preferable. When the screw rotates on a hollow axle, a heating medium, e.g., steam or hot water, may be supplied into the axle. The flight may be hollow to allow a heating medium to run therethrough. Moreover, an extrusion screw may be equipped with a cooling means, to prevent excessive decomposition of the polymer.

The extrusion drier for the present invention is operated under conditions varying depending on type and molecular weight of the polyolefin, reaction solvent and so on. However, it is generally operated at 30 to 240°C as inside temperature, 1 to 700 mmHg as outlet pressure and 1 to 180 minutes as residence time, preferably 60 to 170°C, 10 to 400 mmHg and 3 to 60 minutes, respectively.

Several problems will occur when it is operated at below 30°C as inside temperature, e.g., increased system size because of decreased drying rate, increased investment/running cost for condensing/recovering the evaporated solvent, increased power cost because of increased viscosity of the polymer dried to remove the solvent or the like, and deteriorated drying efficiency. At above 240 °C, on the other hand, deterioration of the polyolefin will be accelerated.

When it is operated at below 1 mmHg as outlet pressure, problems, e.g., increased exhaust pump size and decreased drier inside temperature, will occur. At above 700 mmHg, on the other hand, drying will be retarded. Drying time beyond the above range is not desirable, because drying will be insufficient at a residence time below 1 minute, and a larger system is required at above 180 minutes.

Drying the polyolefin solution by a vent-equipped extrusion drier operating under the conditions within the above ranges can decrease solvent content to 2% by mass or less, preferably 1% or less, more preferably 0.5% or less.

The method for drying the polyolefin solution by a vent-equipped extrusion drier is described in detail above. When the solution is low in polyolefin concentration, it may be treated by distillation or the like to increase the concentration before being dried.

JP-A-9-3124 sited earlier discloses a method for producing an acid-modified polyolefin, different from the present invention, which produces a modified polyolefin continuously from the monomer.

### (iii) Modification step

This step modifies the polyolefin in the presence of a modifier (k) and radical reaction initiator (j) in an extrusion kneader (h), to which the dried/molten polyolefin is supplied. The reaction may be carried out in 2 or more stages. In this case, the extrusion kneader (h) may include a plurality of kneaders as the reactors and reaction modes, combined with each other adequately.

### (h) Kneader

A common extrusion kneader may be adopted for the polyolefin modification.

The extrusion kneader for the present invention is connected to the discharge port of the vent-equipped extrusion drier to continuously receive the molten polyolefin. It modifies the polyolefin charged at one end of the casing (cylinder) while extruding it to the other end by an extrusion screw rotating in the casing in the presence of a modifier and radical reaction initiator, also charged in the casing.

The extrusion kneader typically comprises a casing (cylinder) set almost horizontally, extrusion screw rotating in the cylinder, screw driver/reducer, polyolefin receiving hopper (connecting device), modifier and radical reaction initiator injection ports, and discharge port at the other cylinder end opposite to the hopper, from which the modified polyolefin is discharged as the major components. It is preferable to provide a plurality of the ports in such a way that the modifier and radical reaction initiator can be individually injected, each in installments. A degassing vent opening, although not an essential component, may be provided on the cylinder side wall to remove the unreacted modifier or a reaction by-product.

The extrusion kneader may have a structure similar to that of the extrusion drier, except that the modifier and radical reaction initiator injection ports are provided and a vent is not essential. The extrusion kneader is preferably equipped with a means for cooling the modified polyolefin in the downstream side, to prevent decomposition or crosslinking of the kneaded polymer discharged from the system.

The modification reaction conditions vary depending on type and molecular weight of the polyolefin, type and content of each of the modifier and radical reaction initiator, and so on. However, the extrusion kneader is generally operated at 60 to 220°C as inside temperature, preferably 90 to 190°C. An inside temperature beyond the above range is not desirable. At below 60°C, the reaction will proceed at an insufficient rate. At above 220°C, on the other hand, the molecular chain scission will occur excessively in the polyolefin. Reaction temperature may be kept constant or varied in the modification process.

Reaction time (residence time in the kneader) is preferably 0.1 to 20 minutes, more preferably 0.2 to 10 minutes. Modification reaction efficiency may be insufficient when reaction time is shorter than 0.1 minutes. Increasing reaction time increases quantity of the modifier introduced into the polyolefin. However, molecular weight decrease and coloration of the polyolefin resulting from its deterioration will be significantly noted when it exceeds 20 minutes.

The radical modification reaction may be carried out in a continuous kneader operating in 2 or more stages, where at least one of modifier and radical reaction initiator can be injected into each stage, at least partly. Moreover, at least one of modifier and radical reaction initiator may be injected in installments through a plurality of the ports.

When 2 or more species of modifiers are used, they may be injected at a time or separately. For example, a modifier of lower modification reaction rate is injected in the initial stage of the reaction and a modifier of higher reaction rate is injected after the reaction proceeds to some extent. In another mode, a relatively stable modifier which causes little reactions except grafting of polyolefin under the modification reaction conditions is injected all at once immediately after the modification reaction is initiated, and then a modifier relatively unstable and easily consumed under the modification reaction conditions is injected continuously or sequentially in installments.

In still another mode, one of two species of modifiers is injected before a polyolefin is heated to modification reaction temperature, and the other modifier is injected when reaction temperature reaches a given level. In still another mode, they may be injected simultaneously or sequentially after polyolefin is heated to modification reaction temperature.

A chain transfer adjustor may be injected into the modification reaction system, as required, to adjust polymerization degree of the modifier. Such an agent works to decrease degree of polymerization of modifiers with each other and, at the same time, to uniformize chain length.

Any compound may be used as a chain transfer adjustor for the present invention, so long as it can control polymerization degree of the modifier. The representative ones include mercaptans, e.g., t-dodecyl mercaptan; and disulfides, e.g., bis-2-aminodiphenyl sulfide.

When the modification reaction is carried out at an elevated temperature, the reaction system may be incorporated with an antioxidant to suppress decomposition of the polyolefin. An antioxidant works as a radical scavenger and/or peroxide decomposer under the reaction conditions, to prevent deterioration of the polyolefin resulting from thermal oxidation during the modification reaction process.

Any compound may be used as an antioxidant for the present invention, so long as it can suppress decomposition of the polyolefin. It should be noted, however, that, when titanium and/or vanadium ion and/or compound is present in the polyolefin, an antioxidant having phenolic hydroxyl group may form a chromophore, e.g., quinine compound, to stain the modified polyolefin.

The representative antioxidants suitable for the present invention include phosphites, e.g., 1,1,3-tris(2-methyl-4-di-tridecylphosphite-5-t-butylphenyl)butane; and thioethers, e.g., distearylthiodipropionate.

### (k) Modifier

One or more species selected from the group consisting of the compounds represented by the general formula (a) or (b), dicarboxylic acids and dicarboxylic anhydrides are used as the modifier(s) for modification of polyolefin.

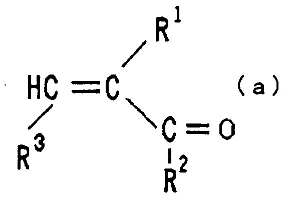

In the general formula (a), R¹ is hydrogen atom or an alkyl group of 1 to 10 carbon atoms; R² is OR⁴, a halogen selected from the group consisting of Cl, Br, F and I, N(R¹)₂ group or R⁵-N(R¹)₂ group; and R³ is hydrogen atom or -COR² group, where R⁴ is hydrogen atom or an alkyl group of 1 to 10 carbon atoms; an aromatic group which can be substituted with an alkyl group of 1 to 10 carbon atoms; -(CH₂)ₐ-O-P(O)(OR¹)₂ or -(CH₂)ₐ-O-P(O)(O-)(O-(CH₂)b-N⁺(R¹)₃ ("a" and "b" are each an integer of 1 to 5); an alkali metal M selected from the group consisting of Li, Na and K; an alicyclic hydrocarbon of 5 to 10 carbon atoms; glycidyl group; R⁵-COCR¹=CH₂; R⁵OR¹; R⁵Si(OR¹)₃ or R⁵-NCO; and R⁵ is an alkylene group of 1 to 10 carbon atoms or -[(CH₂)_{q}-O-]ᵣ-; and "q" and "r" are each an integer of 1 to 5.

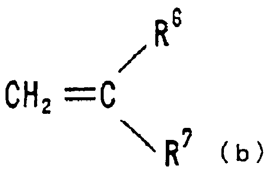

In the general formula (b), R⁶ is hydrogen atom, an alkyl group of 1 to 10 carbon atoms or halogen selected from the group consisting of Cl, Br, F and I; R⁷ is Ar-X', OCO-R⁶, CHO, COR⁶, CN, pyridyl group, pyrrolidonyl group, Si(OR¹)₃, a halogenated alkyl group of 1 to 10 carbon atoms, halogen, OR⁶, OSO₃M or NH-CO-R₆, where X' is R⁶, OH, COOH, NH₂, CN, NO₂, a halogenated alkyl group of 1 to 10 carbon atoms, CH=CH₂ or OCO-R⁶; R¹ is hydrogen atom or an alkyl group of 1 to 10 carbon atoms; and M is the alkali metal described above.

The compounds represented by the general formula (a) include (meth)acrylic acid and derivatives thereof. More specifically, they include the following compounds:
Alkyl esters, e.g., methyl acrylate, ethyl acrylate, n-butyl acrylate, isobutyl acrylate, t-butyl acrylate, cyclohexyl acrylate, 2-ethylhexyl acrylate, n-octyl acrylate, triphenylmethyl acrylate, methyl methacrylate, ethyl methacrylate, n-butyl methacrylate, isobutyl methacrylate, t-butyl methacrylate, cyclohexyl methacrylate, 2-ethylhexyl methacrylate, n-octyl methacrylate and triphenylmethyl methacrylate; glycidyl esters, e.g., glycidyl acrylate and glycidyl methacrylate; alkali metal salts of (meth)acrylic acid, e.g., sodium acrylate, potassium acrylate, lithium acrylate, sodium methacrylate, potassium methacrylate and lithium methacrylate; halides of (meth)acrylic acid, e.g., acrylic acid chloride, acrylic acid bromide and α-chloro-methyl acrylate, methacrylic acid chloride, methacrylic acid bromide and α-chloro-methyl methacrylate; amino-containing (meth)acrylic acid derivatives, e.g., acrylamide, N,N-dimethyl acrylamide, N,N-diisopropyl acrylamide, methacrylamide, N,N-dimethyl methacrylamide, N,N-diisopropyl methacrylamide, N,N-dimethylaminoethyl acrylate, N,N-dimethylaminoethyl methacrylate; di(meth)acrylates, e.g., ethylene glycol diacrylate, diethylene glycol diacrylate, dipropylene glycol diacrylate, 1,4-butanediol diacrylate, 1,6-hexanediol diacrylate, ethylene glycol dimethacrylate, dipropylene glycol dimethacrylate, 1,4-butanediol dimethacrylate and 1,6-hexanediol dimethacrylate; OH- or alkoxy-containing (meth)acrylic acid derivatives, e.g., 2-hydroxyethyl acrylate, 3-hydroxypropyl acrylate, 4-hydroxybutyl acrylate, trimethoxysilylpropyl acrylate, 2-methoxyethyl acrylate, 2-hydroxyethyl methacrylate, 3-hydroxypropyl methacrylate, 4-hydroxybutyl methacrylate, 2-methoxyethyl methacrylate and trimethoxysilylpropyl methacrylate; isocyanate-containing (meth)acrylic acid derivatives, e.g., 2-isocyanateethyl methacrylate and 2-isocyanateethyl acrylate; and P-containing (meth)acrylic acid derivatives, e.g., ethylene glycol methacrylate phosphate and 2-methacryloyloxyethyl phosphorylcholine. Other P-containing (meth)acrylic acid derivatives include CH₂=C(CH₃)CO-O-CH₂-CH₂(CH₂Cl)-O-PO(OH)₂ and CH₂=C(CH₃)CO-O-CH₂-CH₂-O-PO(OH)-O-NH₃(CH₂CH₂OH).

Of these compounds represented by the general formula (a), acrylic acid, methacrylic acid, and alkyl esters, glycidyl esters and OH-containing or alkoxy- containing derivatives of these acids are more preferable for the present invention.

The compounds represented by the general formula (b) include nitrile compounds, e.g., acrylonitrile and methacrylonitrile; vinyl compounds, e.g., vinyl chloride, vinyl iodide, vinylidene chloride, sodium vinylsulfonate, potassium vinylsulfonate, lithium vinylsulfonate, methylvinyl ether, ethylvinyl ether, isobutylvinyl ether, vinyl pyridine, N-vinyl pyridine, vinyl pyrrolidone, acrolein, methylvinylketone, isobutylvinylketone, vinyl acetate, vinyl propionate, vinyl butyrate, vinyl trimethylsilane, vinyl triethoxysilane, vinyl acetoamide, N-vinyl acetoamide and allyl chloride; and styrene and derivatives thereof, e.g., styrene, hydroxystyrene, aminostyrene, divinyl benzene, vinyl benzoate, cyanostyrene, nitrostyrene, chloromethyl styrene, α-methyl styrene, p-methyl styrene, acetoxystyrene and p-dimethylaminomethyl styrene.

Of the compounds represented by the general formula (b), styrene derivatives are particularly preferable for the present invention.

The dicarboxylic acids useful for the present invention include unsaturated aliphatic dicarboxylic acids, e.g., maleic acid, citraconic acid, fumaric acid, itaconic acid, mesaconic acid, glutaconic acid, vinyl maleic acid and allylsuccinic acid; derivatives including unsaturated aliphatic dicarboxylic acid esters; dimethyl maleate and diethyl maleate; and cycloalkane dicarboxylic acids, e.g., tetrahydrophthalic acid and tetrahydroterephthalic acid and derivatives thereof. Dicarboxylic anhydrides are also useful. They include maleic, itaconic, citraconic, tetrahydrophthalic, endomethylenetetrahydrophthalic and methylendomethylenetetrahydrophthalic anhydrides.

Of these dicarboxylic acids, maleic, citraconic and fumaric acids are more preferable, and maleic acid is particularly preferable. Of these dicarboxylic anhydrides, maleic, itaconic and citraconic anhydrides are more preferable, and maleic anhydride is particularly preferable.

### (j) Radical reaction initiator

The radical reaction initiator for the present invention may be selected from those commonly used as an initiator for radical polymerization, e.g., an azo-based compound and organic peroxide.

Representative examples of the suitable radical reaction initiators include azo-based compounds, e.g., azobisisobutylonitrile; ketone peroxides, e.g., 1,1-bis-t-butylperoxy-3,3,5-trimethylcyclohexane; dialkylperoxides, e.g., dicumyl peroxide; hydroperoxides, e.g., 2,5-dimethylhexane-2,5-dihydroperoxide; dialkylperoxides, e.g., benzoyl peroxide; peroxy esters, e.g., 2,5-dimethyl-2,5-di-t-butylperoxyhexane and 2,5-dimethyl-2,5-dibenzoylperoxyhexane; diphenylbutanes, e.g., 2,3-dimethyl-2,3-diphenylbutane; and t-butylperoxy-2-ethylhexanoate.

One or more species of radical reaction initiators may be used.

When 2 or more species of initiators are used, they may be injected at a time or separately. For example, an initiator of longer half life is injected all at once during the initial stage of the modification reaction, and then a modifier of shorter half life is injected continuously or sequentially in installments.

The radical reaction initiator is incorporated at 0.05 to 50% by mass based on polyolefin, preferably 0.1 to 30%, more preferably 1 to 10%. At below 0.05% by mass, modification efficiency will be insufficient to increase quantity of the modifier remaining unreacted in the reaction system, leading to deteriorated adhesiveness and adhesive strength durability of the polyolefin. At above 50% by mass, on the other hand, modification degree of the polyolefin will be insufficient and, at the same time, molecular weight reduction of the polyolefin will be accelerated under the modification conditions.

### (PO2) Modified polyolefin

The modified polyolefin (PO2) can be produced by modifying the polyolefin (PO1) in the presence of the modifier unit, described above. In other words, the present invention can produce a functional polyolefin useful for various purposes efficiently and economically by a simple process.

The modified polyolefin produced by the method of the present invention includes the modifier grafted to the main polyolefin chains. Content of the modifier, or modification rate of the polyolefin, is 0.01 to 20% by mass based on the polyolefin, preferably 0.05 to 15%, more preferably 0.1 to 10%.

At below 0.01% by mass, the polyolefin may be functionally insufficient. At above 20% by mass, on the other hand, economic efficiency will deteriorate due to increased production cost.

### (iv) Catalyst removal step

The polyolefin solution produced in the polymerization step (i) contains the homogeneous metallic complex catalyst, which may deteriorate modification efficiency. Therefore, the catalyst is preferably removed from the solution prior to the modification step (iii). It is difficult and time-consuming to refine the polymer by removing the catalyst component after the drying step (ii), and hence is practical to remove the catalyst before the step (ii).

The catalyst removal step comprises two steps of (1) catalyst insolubilization and (2) insolubilized catalyst removal. The catalyst insolubilization step (1) may be carried out by incorporating a specific compound having hydroxyl group to selectively insolubilize the catalyst component, or by adsorbing the catalyst component on an adsorbent.

### (1) Insolubilization of catalyst

The catalyst metal component, present in a polyvalent metal ion state in the polyolefin solution, is insolubilized and deposited in the presence of a specific compound having hydroxyl group, incorporated in the solution. Therefore, it can be separated/removed by the solid/liquid separation step, in which the polyolefin remains unseparated.

The compound having hydroxyl group for the present invention can be selected from the group consisting of water, alcohols (including polyhydric alcohols) and carboxylic acids. They may be used either individually or in combination. It is preferably the same as that used as the polymerization terminator for common use of the solvent storage tank and distillation system for solvent refining to simplify the process.

The alcohol for the above purpose is preferably an aliphatic alcohol of 1 to 10 carbon atoms, more preferably 1 to 6 carbon atoms, still more preferably 1 to 4 carbon atoms. Particularly preferable ones are methanol, ethanol propanol and butanol. The alcohol, which is used as a polymerization terminator for deactivating the catalyst, can also insolubilize the catalyst when incorporated in the solvent.

The preferable polyhydric alcohol is glycol of 1 to 5 carbon atoms, e.g., ethylene glycol, propylene glycol, trimethylene glycol and 1,4-butanediol. Trivalent or higher polyhydric alcohols include glycerin, trimethylolethane, erythritol, and pentaerythritol.

The carboxylic acids useful for the present invention include aliphatic monocarboxylic acids and polyvalent carboxylic acids. More specifically, they include formic acid, acetic acid, propionic acid, oxalic acid, malonic acid and succinic acid.

Content of the compound having hydroxyl group should be changed according to the compound, catalyst and reaction solvent types, and content of the polyolefin in the reaction solution, among others. It is preferably not to separate the polyolefin out of the solution and, at the same time, not to cause separation of the solution into two layers.

It is preferably 1 to 100% by mass based on solvent, e.g., benzene, toluene, xylene or the like, more preferably 3 to 25%, particularly preferably 4 to 15%. The content beyond the above range is not desirable. At below 1% by mass, separation of the catalyst component may be insufficient. At above 100% by mass, on the other hand, the polyolefin may separate out.

For insolubilization of the catalyst, the polyolefin solution may be incorporated, in addition to the compound having hydroxyl group, an alkaline component, which can help remove a halogen from the catalyst solution.

The alkaline components useful for the present invention include metal alcolates and alkali metal hydroxides. More specifically, they include sodium methoxide, sodium ethoxide, calcium methoxide, calcium ethoxide, sodium hydroxide and potassium hydroxide. The alkaline component is incorporated in the form of methanol or ethanol solution.

The alkaline component may be incorporated before incorporation of the compound having hydroxyl group in the polyolefin solution, but more preferably after, particularly preferably concurrently. Content of the alkaline component is not limited, so long as the polyolefin solution is kept at a pH level of 5 or more, preferably around 8, more preferably 7, although the upper allowable pH level is 9.

The following conditions are preferably kept to insolubilize, and thereby deposit and separate out, the catalyst component in the presence of the compound having hydroxyl group.

Incorporation and mixing time is preferably 1 minute or more, more preferably 3 minutes or more, particularly preferably 5 minutes or more. The catalyst component may not be sufficiently insolubilized when mixing time is shorter than 1 minute.

Mixing temperature is room temperature to 120°C, preferably 30 to 100°C, more preferably 40 to 80°C. At below room temperature, the reaction for insolubilizing and separating the catalyst component will proceed very slowly. At above 120°C, on the other hand, the reaction for insolubilizing the catalyst component will proceed insufficiently. When methanol is used as the compound having hydroxyl group, for example, it evaporates heavily at 55 °C or higher to prevent sufficient precipitation of the catalyst component.

Insolubilization of the catalyst component is a solid/liquid separation process to remove the catalyst component, in which no separation of polyolefin is involved. This process brings the polyolefin solution into contact with an adsorbent which adsorbs the catalyst component present in the form of polyvalent metal ion. It can include, at least partly, filtration or centrifugal separation.

The adsorbent may be a high-molecular-weight coagulant, ion-exchanging resin, chelating resin or the like. They may be used either individually or in combination.

The high-molecular-weight coagulant may be anionic, cationic or nonionic.

The anionic high-molecular-weight coagulants include sodium alginate, sodium polyacrylate, copolymer of acrylamide and sodium acrylate, and partially hydrolyzed polyacrylamide.

The cationic high-molecular-weight coagulants include water-soluble hydrochlorate of aniline resin, polyethylimine, polyamine, polydiallyldimethyl ammonium chloride, chitosan, hexamethylenediamine, epichlorohydrin polycondensate, polyvinyl imidazoline, polyalkylamino acrylate, polyalkylamino methacrylate, Mannich-modified polyacrylamide.

The nonionic high-molecular-weight coagulants include polyalkylamide, polyethylene oxide.

When incorporated in the polyolefin solution, the high-molecular-weight coagulant is preferably in the form of aqueous solution having a viscosity of 1000 cp or less. The aqueous solution preferably has a concentration of 0.01 to 5% by mass, more preferably 0.1 to 2%, particularly preferably 0.1 to 1%.

The high-molecular-weight coagulant is incorporated in, and brought into contact with, the polyolefin solution with stirring. Content of the coagulant varies depending on the homogeneous metallic complex catalyst and reaction solvent types, and content of the polyolefin in the reaction solution, among others. However, the aqueous solution of the coagulant is incorporated at 0.2 to 40% by volume based on the polyolefin solution, preferably 0.5 to 20%, particularly preferably 0.5 to 10%. Incorporation of the aqueous solution at a rate beyond the above range is not desirable. At below 0.2%, the catalyst component may not be sufficiently adsorbed. At above 40%, on the other hand, the polyolefin may separate out.

The ion-exchanging resin may be cationic, anionic or ampholytic. A cationic resin is more preferable for the present invention, in particular strongly acidic one. A strongly acidic, cationic ion-exchanging resin comprises polystyrene as the base structure to which sulfonic acid group is bound, and will efficiently adsorb the polyvalent metallic catalyst ion in the polyolefin solution.

The ion-exchanging resin is incorporated in, and brought into contact with, the polyolefin solution with stirring. Content of the ion-exchanging resin varies depending on the homogeneous metallic complex catalyst and reaction solvent types, and content of the polyolefin in the reaction solution, among others. However, it is incorporated at 0.2 to 40% by volume based on the polyolefin solution, preferably 0.5 to 35%, particularly preferably 0.5 to 25%. Incorporation of the ion-exchanging resin at a rate beyond the above range is not desirable. At below 0.2%, the catalyst component may not be sufficiently adsorbed. Increasing the rate beyond 40%, on the other hand, will little improve adsorption efficiency and is uneconomical.

The chelating resin forms a chelate with a metallic ion, e.g., transition metal or alkali-earth metal ion to selectively adsorb/remove a heavy metal present in the solution. The preferable chelating resins for the present invention are those with a polystyrene structure as the base to which iminodiacetic acid group or polyamine group is bound.

The chelating resin is incorporated in, and brought into contact with, the polyolefin solution with stirring. Content of the chelating resin varies depending on the homogeneous metallic complex catalyst and reaction solvent types, and content of the polyolefin in the reaction solution, among others. However, it is incorporated at 0.2 to 40% by volume based on the polyolefin solution, preferably 0.5 to 20%, particularly preferably 0.5 to 15%. Incorporation of the ion-exchanging resin at a rate beyond the above range is not desirable. At below 0.2%, the catalyst component may not be sufficiently adsorbed. Increasing the rate beyond 40%, on the other hand, will little improve adsorption efficiency and is uneconomical.

The other adsorbents useful for the present invention include polyacrylic acid and crosslinked polyacrylic acid in the form of bead.

When an adsorbent is incorporated in the polyolefin solution, a surfactant can be also incorporated. In particular, when an adsorbent is incorporated in the form of aqueous solution (e.g., high-molecular-weight coagulant), a surfactant helps mix the adsorbent and solution with each other to accelerate adsorption of the catalyst component.

The surfactant for the present invention is not limited. The useful surfactants include those based on nonylphenol, alkylphenol, higher alcohol, polyalkylene glycol (EO/PO-based), fatty acid ester, alkylolamide, EO-adduct of alkylamide, EO/PO-adduct of alkylamine and alkylamine oxide.

The surfactant is incorporated in the polyolefin solution at 0.001 to 1% by volume based on the solution, preferably 0.01 to 0.8%, particularly preferably 0.05 to 0.5%. At below 0.001%, the adsorbent-containing solution and polyolefin solution may not be well mixed with each other. At above 1%, on the other hand, the surfactant may have a negative effect on the final product.

An alkaline component may be incorporated in the polyolefin solution together with an adsorbent. The alkaline component may be incorporated after incorporation of the adsorbent, but more preferably before. Content of the alkaline component is not limited, so long as the polyolefin solution is kept at a pH level of 5 or more, preferably around 8, more preferably 7, although the upper allowable pH level is 9.

The catalyst is adsorbed on the adsorbent preferably under the following conditions, when the adsorbent is incorporated in the polyolefin solution and stirred.

The adsorbent is incorporated at 0 to 70°C, more preferably 5 to 60°C, particularly preferably 10 to 50°C. Temperature at which it is mixed with the polyolefin solution with stirring is 0 to 60°C, more preferably 5 to 50°C, still more preferably 10 to 40°C. At below 0°C, the adsorption reaction will proceed very slowly. At above 60°C, on the other hand, the catalyst component may not be sufficiently adsorbed. Stirring/mixing time is preferably 1 minute to 5 hours, more preferably 5 minutes to 2 hours, particularly preferably 10 minutes to 1 hour, although varying depending on stirring rate. When it is shorter than 1 minute, adsorption will not proceed. When it is longer than 5 hours, on the other hand, the metallic ion once adsorbed may be desorbed.

When an ion-exchanging resin, chelate resin, crosslinked polyacrylic acid (in the form of bead) or the like is used as the adsorbent, the polyolefin solution can be directly passed over the adsorbent packed in a column, without being stirring/mixing-treated under the above conditions, to adsorb the catalyst component thereon. Temperature at which the solution is passed over the adsorbent is preferably 0 to 70°C, more preferably 5 to 60°C, still more preferably 10 to 50°C. Time for which it is passed is preferably 0.01 to 5 hour⁻¹ in terms of space velocity, more preferably 0.1 to 4 hour⁻¹, still more preferably 0.5 to 3 hour⁻¹.

The catalyst insolubilizing step may be skipped, depending on the catalyst adopted, e.g., the above-described catalyst of one of (I) to (VII) supported by a carrier, because it is insoluble in the solution and hence kept insolubilized.

### (2) Removal of the catalyst component

In the present invention, the catalyst component is insolubilized under the conditions described above, and then removed from the solution. The method for removing the catalyst component is not limited, and can be selected from various liquid/solid separation methods, e.g., filtration, centrifugal separation and decantation.

Filtration may be pressurized, vacuum or centrifugal. A combination of 2 or more types may be adopted. The filter may be paper, cloth, membrane, sintered metal or the like. The cloth material is not limited, so long as it is not dissolved, greatly swollen or greatly losing strength when it is in contact with the solution. Generally, it may be cotton or polyester.

Filtration temperature is room temperature to 80°C, preferably 30 to 75°C, more preferably 40 to 70°C. At below room temperature, filtration efficiency may be insufficient because the solution is highly viscous. Increasing temperature decreases solution viscosity to increase filtration rate. The solution can be filtered at above boiling point of its solvent under an elevated pressure. Filtration pressure is preferably increased slowly while watching how the filtration proceeds, although depending on filter type and filter paper properties. When paper is used as the filter, for example, the highest pressure in the final stage is kept at 400 kPaG or less, preferably 300 kPaG or less.

Moreover, a filtration aid may be used to accelerate filtration. The filtration aid is not limited. It may be at least one species selected from the group consisting of cellulose, asbestos, cerite, pearlite, diatomaceous earth, white clay, silica and alumina. Cellulose, when used, may be finely fibrous. It is incorporated at 0 to 25% by mass based on the polyolefin solution, preferably 0 to 20%, more preferably 0 to 15%.

When filtration is adopted, precoating the filter cloth beforehand with a filtration aid can prevent clogging of the filter in the early stage. Thickness of the precoating layer is not limited, so long as it is at least a level at which the filtration aid can be spread essentially uniformly on the filter cloth but less than a level at which filtration rate is decreased. It is preferably 0.5 to 30 mm, more preferably 1.5 to 10 mm.

For precoating, a uniform dispersion of the filtration aid dispersed in a solvent is slowly charged into the filter, while the downstream side of the filter is closed to keep the filtrate in the filter, or stirred in the filter before filtration is started, in order to spread the aid on the filter cloth to a uniform thickness. When part of the precoating layer is severely hit by the solution containing the insolubilized matter, it may come off to greatly deteriorate the precoating effect. Therefore, the system and/or operational considerations shall be taken to prevent these troubles.

Quantity of the insolubilized matter deposited on the filter cloth gradually increases as filtration proceeds to slowly decrease filtration rate, unless it is continuously scraped off by an adequate means. In this case, decrease in filtration rate can be controlled by passing a suspension of the insolubilized matter beforehand, after it is incorporated uniformly with a filtration aid.

Centrifugal separation is carried out under a centrifugal force of, e.g., 1000 G or more, preferably 3000 G or more, more preferably 5000 G or more. Separation time is 1 minute to 3 hours, preferably 5 minutes to 2 hours, more preferably 10 minutes to 1.5 hours, although varying depending on centrifugal force applied. Separation temperature is not limited, so long as it is lower than boiling point of the solvent for the polyolefin solution. However, it is 0 to 70°C, preferably 5 to 60°C, more preferably 10 to 50°C.

Decantation is a separation method in which the catalyst component insolubilized in the polyolefin solution is allowed to totally settle. The supernatant solution is flown out of the system to be recovered. The supernatant solution is preferably treated further by filtration or centrifugal separation, when the colloidal precipitate or the like can remain in the solution.

### (v) Refining

The polyolefin modified in the modification step (iii) may contain the unreacted modifier and a derivative thereof, and hence is preferably refined adequately. The modifier derivatives are mainly the unreacted modifier and its oligomer.

The unreacted modifier and derivative thereof can be separated and removed by heating the modified polyolefin under a vacuum to evaporate or sublimate them. More specifically, for example, the modified polyolefin can be refined by directly connecting the discharge port of the two-axle extrusion kneader adopted in the modification step to the vent-equipped two-axle extrusion drier adopted in the drying step to treat the polyolefin under the conditions preferably of temperature: 50 to 200°C, pressure: 1 to 700 mmHg and residence time: 1 to 30 minutes, more preferably temperature: 100 to 180°C, pressure: 5 to 200 mmHg and residence time: 2 to 15 minutes.

On completion of the modification reaction, the modified polyolefin may be cooled by cooling the discharge port of the kneader, or by being directly put in a cooling means, e.g., water bath, after it is withdrawn into a container. As required, it may be indirectly cooled with a cooling medium which cools the container outside. Moreover, it may be incorporated with unmodified, highly crystalline polyolefin (e.g., polypropylene) to be kneaded in the kneader, instead of being cooled or while being cooled.

The modified polyolefin thus produced can be pelletized into pellets of uniform shape for ease of transportation and utilization.

### 3. Method for producing modified polyolefin (specific examples)

Next, one embodiment of the method of the present invention for producing modified polyolefin is described by referring to Fig. 2.

Fig. 2 illustrates the process comprising the reaction tank (A), catalyst component deposition tank (B), catalyst component separation unit (C), drier (D) and kneader (E).

An α-olefin is polymerized in the reaction tank (A), and the resulting polyolefin solution is transferred to the catalyst component deposition tank (B), where it is incorporated with a compound having hydroxyl group and alkali component to insolubilize the metal and halogen components, or with an adsorbent to adsorb the metal component thereon. The treated solution is then transferred to the catalyst component separation unit (C) equipped with a filter and/or centrifugal separator, where the catalyst component is separated from the solution.

On the other hand, the resulting filtrate or supernatant solution produced by the centrifugal separation is transferred to the drier (D), e.g., vent-equipped extrusion drier, where the polyolefin solution is treated to remove a polymerization terminator, compound having hydroxyl group and solvent by evaporation while the polyolefin is being dried. The polymer, dried to become semi-molten, is transferred from the drier (D) to the kneader (E). The polyolefin is modified in the kneader (E) in the presence of a modifier, radical reaction initiator, and, as required, chain transfer adjustor and/or antioxidant. This produces the modified polyolefin.

### EXAMPLES

The present invention is described in more detail by EXAMPLES, which by no means limit the present invention.

The polymer was analyzed by the following evaluation procedures in EXAMPLES and COMPARATIVE EXAMPLES.

### Evaluation procedures

### (1) Determination of molecular weight

Molecular weight was determined by gel permeation chromatography (Waters, GPC Model 150) under the conditions of solvent: o-dichlorobenzene, measurement temperature: 135°C, solvent flow rate: 1.0 mL/minute, and column (Tosoh, TSK-GEL, GMH_{XL}-HT), where the polypropylene calibration curve was prepared using monodisperse polystyrene as the standard sample, and used to prepare the calibration curve of polyolefin by the Universal method.

### (2) Determination of stereoregularity

Stereoregularity was determined by a ¹³C-NMR analyzer (Variant, Model XL-200 equipped with a PFT pulse Fourier converter) under the conditions of 50 MHz, 120°C, pulse width: 8.2 µs π/3, pulse intervals: 4 seconds, and integration cycles: 5000, where the polymer was dissolved in a mixed trichlorobenzene/benzene (2:1) solvent to prepare the sample.

### (3) Determination of quantity of modifier (number of mols per mol of polyolefin)

Quantity of the modifier introduced (number of mols per mol of polyolefin) was determined from the modifier functional group content determined by an IR analyzer (JASCO, FT/IR-470) and from the number-average molecular weight determined using the GPC curve. For the IR analysis, the polymer was formed into a film-shape.

### (4) Determination of content of the catalyst component in the polymer solution

Content of the catalyst component in the polymer solution was determined by fluorescent X-ray analysis.

### EXAMPLE 1

### Polymerization of propylene

A 50 L autoclave equipped with a stirrer was charged, after it was sufficiently purged with nitrogen, with 25 L of toluene and kept at 21°C, in which 750 mL of a 2 mols/L toluene solution of ethyl aluminum sesquichloride was put while temperature was kept at the same level. Then, the autoclave was charged with 125 mL of a 1 mol/L toluene solution of tetrabutoxy titanium, and then with propylene with stirring. Propylene pressure was kept at 3 atoms during the polymerization process. The polymerization was regarded to start when propylene was put in the autoclave. It was allowed to proceed for 8 hours.

Then, the polymerization was terminated with 0.2 L of methanol. This produced 25 kg of the reaction solution, after the unreacted propylene was removed by evaporation. The solution contained polypropylene at 3.4% by mass, and titanium and aluminum at 240 and 3,275 ppm by mass, respectively.

The polymer produced had a GPC curve of single peak, and weight-average molecular weight Mw of 25,000, Mw/Mn ratio of 1.9 and racemic diad fraction [r] of 0.32.

### Removal of the catalyst component

Next, 16.5 kg of the above reaction solution was incorporated with 535 mL of a 0.5% aqueous solution of high-molecular-weight coagulant (Sanyo Chemical Industries, SANFLOC N-500) and 41 mL of surfactant (Adeka, Pluronic), and the mixture was vigorously stirred at room temperature for 30 minutes. Then, the resulting solution was centrifugally treated at a centrifugal force of 5,000 G for 1 hour. This separated the solution into the colorless, transparent upper layer and lower layer containing the high-molecular-weight coagulant, and 15.7 kg of the colorless, transparent supernatant solution was recovered as the refined polymer solution. The supernatant solution contained titanium and aluminum at 4 and 7 ppm by mass, respectively.

### Drying (removal of solvent and the like)

Next, 9 kg of the polymer solution, refined to remove the catalyst component, was sent at 5 kg/hour to a vent-equipped two-axle extrusion drier having an effective volume of 2 L. The drier was operated under the conditions of heating medium temperature: 140°C, operational pressure: 50 mmHg, rotational speed: 70 rpm and residence time: 22 minutes, to remove the lighter compounds, e.g., toluene and methanol, from the polymer solution. The solvent remained in the solution at 0.1% by mass.

### Modification

The polymer treated to remove the solvent was directly sent in the molten state to a two-axle extrusion kneader directly connected to the discharge port of the two-axle extrusion drier, where kneader was heated by a heating medium kept at 120°C. Then, the polymer was kneaded under the conditions of rotational speed: 200 rpm and residence time: 5 minutes for modification with 54 g of methacrylic acid, 50 g of t-butylperoxy-2-ethylhexanoate and 50 g of t-dodecylmercaptan put in the kneader.

The modified polypropylene contained methacrylic acid at 9.5% by mass.

### COMPARATIVE EXAMPLE 1

A 20 L stainless steel container was charged with 13 L of methanol, in which 1 kg of polymerized reaction solution prepared in EXAMPLE 1 was put with stirring, to separate out the polymer. The separated polymer was a highly viscous amorphous solid like starch syrup. It was left deposited on the container bottom and difficult to recover. Therefore, it was left in the same container, and treated with 2.5 L of hydrochloric acid/methanol to extract the catalyst component thereinto, the extract phase was discarded. The polymer, which was an amorphous solid like starch syrup, was left deposited on the container bottom even when stirred with hydrochloric acid/methanol, and never miscible in the liquid phase. Therefore, a stainless steel bar was put in the polymer layer deposited on the container bottom and stirred to improve contacting efficiency between the polymer and hydrochloric acid/methanol.

The extraction with hydrochloric acid/methanol was repeated 5 times, and the polymer was scraped off from the container. It was then dried at 120°C under a vacuum in a vacuum oven. It was difficult to fully recover the polymer deposited on the container wall. It took 20 hours or more to remove methanol odor from the polymer.

The polymer was dissolved in toluene to prepare the polymer solution containing the polymer at the same content as that prepared in EXAMPLE 1, which was treated to remove the catalyst component. It contained titanium and aluminum at 7 and 12 ppm, respectively. COMPARATIVE EXAMPLE 1 needed a larger quantity of solvent than EXAMPLE 1, and was lower both in operability and catalyst component removal rate.

The polymer was also highly viscous, amorphous solid after it was dried under a vacuum. It was cut by a cutter into small pieces, which fast adhered to each other when came into contact, and were fused into blocks when lightly piled on top of another or pressed. Therefore, it should be cut into small strips and manually charged in an extrusion kneader to carry out the modification as the subsequent step.

### EXAMPLE 2

### Polymerization of polymer

A stainless steel reactor pot equipped with a jacket cooler and stirrer was charged, after it was sufficiently purged with nitrogen, with 90 L of toluene and a toluene solution dissolving 12 mols of Al(C₂H₅)_{1.5}Cl_{1.5}, and cooled to -60°C. Then, 210 L of propylene was put in the reactor pot, and dissolved in toluene while it was kept liquid. When the internal temperature was stabilized at -60°C, a toluene solution dissolving 0.14 mols of vanadium trisacetylacetonate was put in the reactor pot to start the polymerization. Then, the toluene solution dissolving 0.14 mols of vanadium trisacetylacetonate was put every 30 minutes. After a total of 0.56 mols of vanadium trisacetylacetonate was put in the reactor pot, the polymerization was continued for 2 hours at -60°C. Then, it was terminated with 10 L of methanol diluted 4 times with toluene. The reaction system was slowly heated to purge unreacted propylene, diluted with 50 L of toluene and the resulting polymer solution was withdrawn from the reactor system.

The polymer produced had a GPC curve of single peak, and weight-average molecular weight Mw of 130,000, Mw/Mn ratio of 1.8 and racemic diad fraction [r] of 0.80, determined by the ¹³C-NMR analysis.

### Removal of the catalyst component

A stainless steel reactor pot equipped with a jacket heater and stirrer was charged with 140 kg of the polymer solution prepared above and 60 kg of toluene, and heated to 50°C with stirring, in which a mixture of 5.8 kg of a 28% by mass methanol solution of sodium methoxide and 8.5 kg of methanol was put. The mixture was stirred at 50°C for 1 hour and then heated to 60°C, in which 13.5 kg a filtration aid (Showa Chemical Industries, Radiolite #700) was put. The mixture was stirred into a homogeneous slurry.

A filter cloth capable of trapping particles of 1 µm in size or larger was set on a horizontal filter operable at an elevated pressure, and coated with a 3mm thick precoating layer of Radiolite #700. Then, the slurry was charged to the filter, after it was heated to 60°C. The filter was closed and pressurized with nitrogen to 50 kGa to start the filtration. The filtrate was whitely turbid during the initial stage, but became colorless, transparent later. Therefore, the turbid filtrate was re-filtered to recover the colorless, transparent filtrate. The filtration was continued for around 3 hours while increasing pressure gradually to 200 kPaG to complete the treatment of the charged polymer solution totally. Then, the polymer solution remained in the residue trapped by the cloth was washed out with 20 kg of toluene to recover the polymer. The refined polymer solution totaled 210 kg.

The solution contained the polymer at 7.5% by mass, and aluminum, vanadium and chlorine each at below 10 ppm.

### Drying (removal of solvent and the like)

Next, 200 kg of the refined polymer solution was heated to 90°C, and sent at 25 kg/hour to a vent-equipped two-axle extrusion drier having an effective volume of 6 L. The drier was operated under the conditions of heating medium temperature: 150°C, operational pressure: 50 mmHg, rotational speed: 70 rpm and residence time: 13 minutes, to remove the lighter compounds, e.g., toluene and methanol, from the polymer solution. The solvent remained in the solution at 0.2% by mass.

### Modification

The polymer treated to remove the solvent was directly sent in the molten state to a two-axle extrusion kneader directly connected to the discharge port of the two-axle extrusion drier, where kneader was heated by a heating medium kept at 150°C. Then, the polymer was kneaded at a residence time of 4 minutes for modification with 2.1 kg of maleic anhydride, 450 g of 2,5-dimethyl-2,5-di-t-butylperoxyhexane and 750 g of an antioxidant (Ciba-Geigy, IRGAFOS 168) put in the kneader.

### Refining

The modified polymer was heated in a vent-equipped two-axle extrusion drier, directly connected to the discharge port of the two-axle extrusion kneaded used for the modification, under the conditions of heating medium temperature: 170°C, operational pressure: 10 mmHg, rotational speed: 100 rpm and residence time: 3 minutes, to remove the unreacted maleic anhydride and 2,5-dimethyl-2,5-di-t-butylperoxyhexane, antioxidant 1,1,3-tris(2-methyl-4-di-tridecylphosphite-5-t-butylphenyl)butane, and/or derivatives thereof.

The modified polypropylene contained maleic anhydride at 1.8% by mass.

The modified polyolefin produced by the method of the present invention can be used for paints, surface modifiers, primers, coating agents, inks, adhesives, solubilizers and intermediates therefore, and hence is of very high industrial value.

## Claims

1. A method for producing a modified polyolefin, comprising steps for polymerizing an α-olefin in the liquid phase in the presence of a homogeneous metallic complex catalyst to produce a low-crystallinity or amorphous polyolefin solution; for continuously drying the resulting polyolefin solution; and for modifying the dried polyolefin in an extrusion kneader.

2. The method according to Claim 1 for producing a modified polyolefin, wherein a step is included for removing the catalyst component before drying the polyolefin solution.

3. The method according to Claim 1 or 2 for producing a modified polyolefin, wherein the polyolefin solution is dried in an extrusion drier equipped with a vent.
